# EUROPEAN PATENT SPECIFICATION

(11) **EP 3 840 340 B1**
(45) Date of publication and mention of the grant of the patent: **09.12.2026**
(21) Application number: 19850407.8
(22) Date of filing: 21.02.2019
(51) Int. Cl.: H04M 1/02, G06F 1/16

(54) **ELECTRONIC DEVICE**
ELEKTRONISCHE VORRICHTUNG
DISPOSITIF ÉLECTRONIQUE

(30) Priority: 17.08.2018 KR 20180095939
(43) Date of publication of application: 23.06.2021
(73) Proprietor: Samsung Display Co., Ltd., Yongin-si, Gyeonggi-Do 17113 (KR)
(72) Inventor: SON, Yanghan, Cheonan-Si Chungcheongnam-do 31091 (KR); KIM, Muhyun, Seoul 06625 (KR); KIM, Sungmin, Yongin-Si Gyeonggi-do 16950 (KR); SHIN, Eunju, Busan 47575 (KR)
(74) Representative: Dr. Weitzel & Partner
(86) International application number: PCT/KR2019/002171
(87) International publication number: WO 2020/036279

(56) References cited:
- EP-A1- 3 388 977
- WO-A1-2017/172017
- CN-A- 108 323 207
- KR-A- 20170 087 635
- KR-A- 20170 119 623
- KR-A- 20180 005 994
- US-A1- 2017 300 736
- US-A1- 2017 364 763
- US-A1- 2018 150 671
- US-A1- 2018 151 641

## Description

### TECHNICAL FIELD

The present invention relates to an electronic device, and more particularly, to an electronic device including a fingerprint sensing unit.

### BACKGROUND ART

US 2017/300736 A1 describes an electronic device and a method of operating the electronic device.

US 2017/364763 A1 describes an electronic device including a display including at least one pixel and at least a partial area of which is transparent.

US 2018/150671 A1 describes an electroluminescent display device integrated with a fingerprint sensor.

CN 108 323 207 A describes an under-screen biometric feature recognition device, a biometric feature recognition assembly and a terminal device.

EP 3 388 977 A1 describes a mobile electronic device including a display panel, a cover glass disposed on the display panel, and a biometric sensor device disposed below the display panel.

KR 2017 0119623 A describes an electronic device for supporting the fingerprint verification and an operating method thereof.

US 2018/151641 A1 describes a display device including a display panel configured to be situated under a transparent substrate and display an image on a display area toward the transparent substrate, a fingerprint sensor under the display panel to detect a fingerprint contacting the transparent substrate, and a drive integrated circuit (drive IC) configured to drive the display panel.

An electronic device provides various functions capable of organically communicating with a user by displaying an image to provide information to the user or sensing an input of the user.

In recent years, the electronic devices include a function of sensing a fingerprint of the user. A fingerprint recognition method includes a capacitive method of sensing a variation in capacitance provided between electrodes, an optical method of sensing incident light by using an optical sensor, and an ultrasonic method of sensing a vibration by using a piezoelectric body. In the recent electronic devices, a fingerprint sensing unit for sensing a fingerprint may be disposed on a rear surface of a display panel and assembled to the electronic device.

### DISCLOSURE OF THE INVENTION

### TECHNICAL PROBLEM

The present invention is defined by the subject matter of independent claims 1 and 15. Preferred embodiments are defined in the dependent claims.

Thus, the present invention provides an electronic device including a fingerprint sensing unit.

### TECHNICAL SOLUTION

The electronic device according to an embodiment of the present invention includes: a display panel including a base substrate including a front surface and a rear surface opposed to the front surface and a plurality of pixels disposed on the front surface of the base substrate configured to display an image; a cover panel disposed on the rear surface of the display panel and in which an opening part is defined; a fingerprint sensor spaced by a predetermined gap from the cover panel and accommodated in the opening part; and an adhesive member accommodated in the opening part and disposed between the fingerprint sensor and the display panel, and the opening part includes a side surface having a step.

The cover panel may include: a first sheet disposed on the rear surface of the display panel; and a second sheet disposed on a rear surface of the first sheet, the opening part may include: a first opening part that passes through the first sheet; and a second opening part that passes through the second sheet and is in overlapped with the first opening part, and the first opening part may have a planar size less than that of the second opening part.

The first sheet may include an embossing panel having waviness.

The second sheet may include a cushion panel.

The adhesive member may contact the first sheet.

The fingerprint sensor may be spaced apart from the second sheet.

The adhesive member may be spaced apart from the first sheet.

The fingerprint sensor may be spaced apart from the side surface of the opening part with a predetermined space therebetween, and the spaced space may be filled by the adhesive member.

The front surface of the base substrate may be divided into a first area on which the image is displayed and a second area adjacent to the first area, and the opening part may overlap the first area on a plane.

The electronic device according to an embodiment of the present invention may further include a lower panel disposed between the cover panel and the display panel, and the adhesive member may couple the lower panel with the fingerprint sensor.

The lower panel may include metal.

The electronic device according to an embodiment of the present invention may further include a cover layer configured to cover the rear surface of the display panel, and the cover layer may have a black color.

The base substrate may have a color.

The electronic device according to an embodiment of the present invention may further include: a circuit board connected to one side of the base substrate; and a sensing circuit board connected with the fingerprint sensor and extending outside the opening part to electrically connect the fingerprint sensor and the circuit board.

The electronic device according to an embodiment of the present invention may further include a touch sensing unit disposed on the front surface of the base substrate, and the touch sensing unit may overlap the pixels on a plane.

The base substrate may include a planar part and a bending part connected with the planar part and bent toward the rear surface of the base substrate, and the cover panel may be disposed between the planar part and the bending part.

The electronic device according to an embodiment of the present invention include: a display panel including a front surface including a display area configured to display an image and a peripheral area disposed adjacent to the display area and a rear surface opposed to the front surface; a first sheet disposed on the rear surface of the display panel and in which a first opening part that is in overlapped with the display area is defined; a second sheet disposed below the first sheet and in which a second opening part that is in overlapped with the first opening part is defined; a fingerprint sensor disposed on the rear surface of the display panel and accommodated in the second opening part; and an adhesive member disposed between the fingerprint sensor and the display panel and accommodated in the first opening part, and the adhesive member has a planar size less than that of the fingerprint sensor.

The first opening part may have a planar size less than that of the second opening part.

The adhesive member may contact a side surface of the first opening part.

The adhesive member may be spaced apart from a side surface of the first opening part.

The electronic device according to an embodiment of the present invention may further include a lower panel disposed between the first sheet and the display panel, and the lower panel may include a light reflecting material.

The electronic device may further include a rear surface cover layer disposed between the first sheet and the display panel to cover the rear surface of the display panel, and the rear surface cover layer may include a light absorbing material.

The rear surface cover layer may be disposed directly on the rear surface of the display panel.

### ADVANTAGEOUS EFFECTS

According to the present invention, the rear surface visible phenomenon of the display panel, which is generated at the area adjacent to the fingerprint sensor, may be reduced. Thus, the outdoor visibility of the electronic device may be enhanced, and the display characteristic thereof may improve.

### BRIEF DESCRIPTION OF THE DRAWINGS

FIG. 1A is a perspective view of an electronic device according to an embodiment of the present invention.
FIG. 1B is an exploded perspective view of the electronic device in FIG. 1A.
FIG. 2 is a block diagram representing the electronic device in FIG. 1A.
FIG. 3A is an exploded perspective view illustrating a portion of components illustrated in FIG. 2A.
FIG. 3B is a coupling perspective view illustrating a portion of components illustrated in FIG. 3A.
FIG. 4 is a coupling perspective view illustrating a portion of components illustrated in FIG. 3A.
FIG. 5A is a rear view illustrating a portion of a display panel unit according to an embodiment of the present invention.
FIGS. 5B and 5C are cross-sectional views illustrating the display panel unit according to an embodiment of the present invention.
FIGS. 6A to 6C are cross-sectional views of a display panel unit according to an embodiment of the present invention.
FIG. 7A is an exploded perspective view of a display device according to an embodiment of the present invention.
FIG. 7B is a cross-sectional view illustrating a portion of components illustrated in FIG. 7A.
FIG. 7C is a cross-sectional view illustrating a display panel unit according to an embodiment of the present invention.
FIG. 8A is an exploded perspective view of a display device according to an embodiment of the present invention.
FIG. 8B is a cross-sectional view illustrating a portion of components illustrated in FIG. 8A.
FIG. 8C is a cross-sectional view illustrating a portion of components of the display device according to an embodiment of the present invention.
FIG. 9A is an exploded perspective view of a display device according to an embodiment of the present invention.
FIG. 9B is a coupling perspective view of a display panel unit according to an embodiment of the present invention.
FIG. 9C is a side view of the display device in FIG. 9A.

### MODE FOR CARRYING OUT THE INVENTION

In this specification, it will also be understood that when one component (or region, layer, portion) is referred to as being 'on', 'connected to', or 'coupled to' another component, it can be directly disposed/connected/coupled on/to the one component, or an intervening third component may also be present.

Like reference numerals refer to like elements throughout. Also, in the figures, the thickness, ratio, and dimensions of components are exaggerated for clarity of illustration.

The term "and/or" includes any and all combinations of one or more of the associated listed items.

It will be understood that although the terms such as 'first' and 'second' are used herein to describe various elements, these elements should not be limited by these terms. The terms are only used to distinguish one component from other components. For example, a first element referred to as a first element in one embodiment can be referred to as a second element in another embodiment. The terms of a singular form may include plural forms unless referred to the contrary.

Also, ""under", "below", "above', "upper", and the like are used for explaining relation association of components illustrated in the drawings. The terms may be a relative concept and described based on directions expressed in the drawings.

Unless otherwise defined, all terms (including technical and scientific terms) used herein have the same meaning as generally understood by those skilled in the art. Terms as defined in a commonly used dictionary should be construed as having the same meaning as in an associated technical context, and unless defined apparently in the description, the terms are not ideally or excessively construed as having formal meaning.

The meaning of 'include' or 'comprise' specifies a property, a fixed number, a step, an operation, an element, a component or a combination thereof, but does not exclude other properties, fixed numbers, steps, operations, elements, components or combinations thereof.

Hereinafter, embodiments of the present invention will be described with reference to the accompanying drawings.

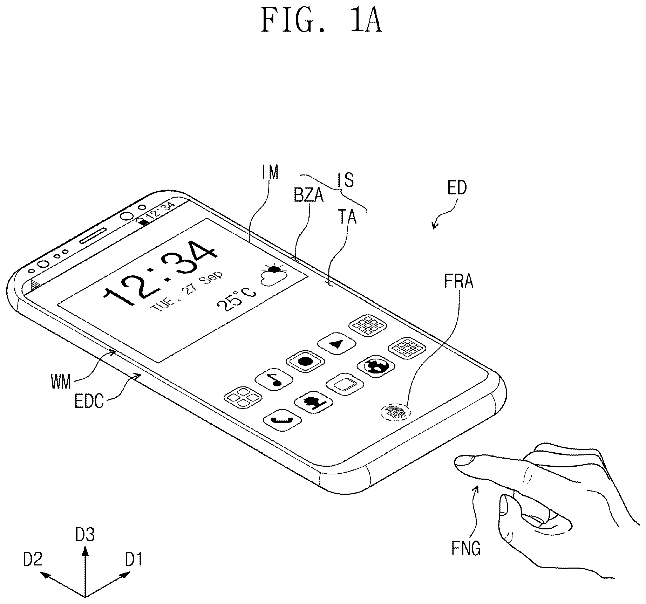

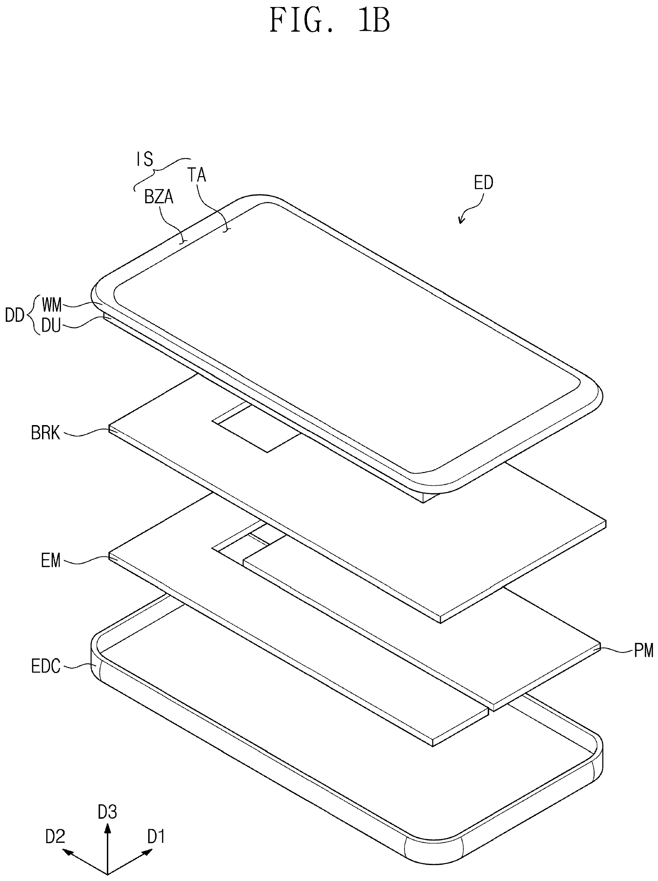

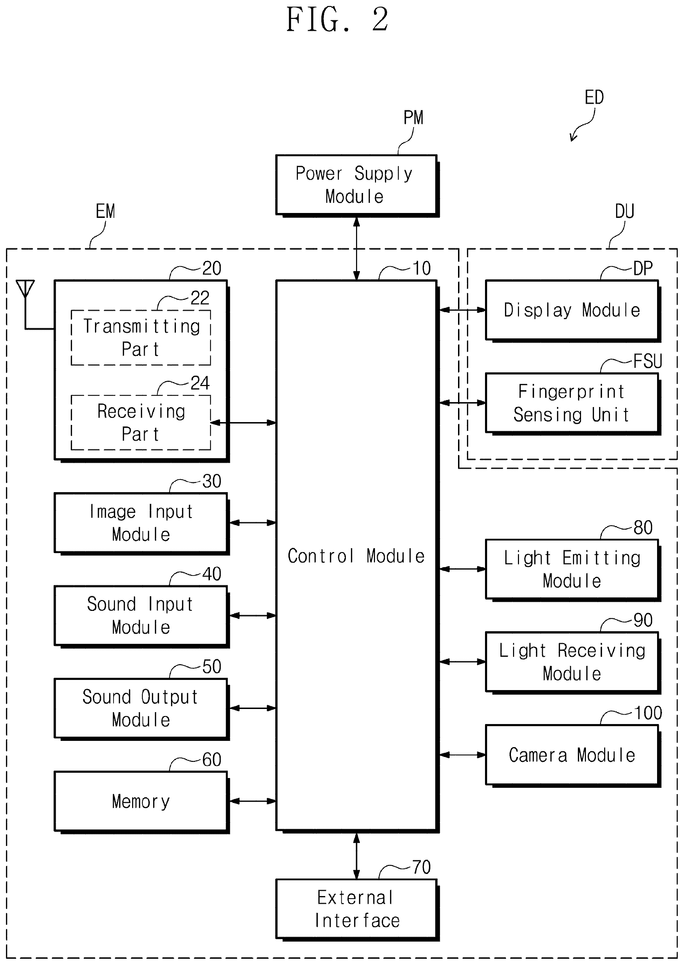

FIG. 1A is a perspective view of an electronic device according to an embodiment of the present invention. FIG. 1B is an exploded perspective view of the electronic device in FIG. 1A. FIG. 2 is a block diagram representing the electronic device in FIG. 1A. Hereinafter, an embodiment of the present invention will be described with reference to FIGS. 1A to 2.

The electronic device ED may be activated according to an electrical signal. The electronic device ED may include various embodiments. For example, the electronic device ED may include tablets, notebook computers, personal computers, and smart televisions. In the embodiment, the electronic device ED is exemplarily illustrated as a smart phone.

The electronic device ED may display an image IM on a display surface IS, which is parallel to each of a first direction D1 and a second direction D2, in a third direction D3. The display surface IS, on which the image IM is displayed, may correspond to each of a front surface of the electronic device ED and a front surface IS of a window member IS. Hereinafter, the display surface and the front surface of the electronic device ED and the front surface of the window member WM are indicated by the same reference symbol. The image IM may include a still image as well as a video. FIG. 1A illustrates an internet search window as an example of the image IM.

In the embodiment, a front surface (or a front surface) and a rear surface (or a bottom surface) of each of members are defined based on a direction in which the image IM is displayed. The front surface and the rear surface may be opposed to each other in a third direction DR3, and a normal direction of each of the front surface and the rear surface may be parallel to the third direction DR3. On the other hand, directions indicated by the first to third directions DR1, DR3, and DR3, as relative concepts, may be converted with each other. Hereinafter, first to third directions may be indicated by the first to third directions DR1, DR2, and DR3 and designated by the same reference numerals, respectively.

The front surface of the electronic device ED may be divided into a transmission area TA and a bezel area BZA. The front surface of the electronic device ED may be defined by the front surface IS of the window member WM. Hereinafter, the front surface of the electronic device ED and the front surface IS of the window member WM are indicated by the same reference symbol.

The transmission area TA may be an area on which the image IM is displayed. A user may recognize the image IM through the transmission area TA. In the embodiment, the transmission area TA has a rectangular shape having rounded vertices. However, this is merely illustrative, and the transmission area TA may have various shapes and not be limited to any one embodiment.

The bezel area BZA is adjacent to the transmission area TA. The bezel area BZA may have a predetermined color. The bezel area BZA may surround the transmission area TA. Thus, the transmission area TA may have a shape that is substantially defined by the bezel area BA. However, this is merely illustrative, and the bezel area BZA may be disposed adjacent to only one side of the transmission area TA or omitted. The electronic device according to an embodiment of the present invention may include various embodiments and not be limited to any one embodiment.

The electronic device ED may sense a fingerprint FNG of the user applied from the outside. Thus, the electronic device ED may provide a fingerprint sensing area FRA to the display surface IS. In the embodiment, it is illustrated that the fingerprint sensing area FRA is provided in the transmission area TA on which the image IM is displayed. However, this is merely illustrative, and the fingerprint sensing area FRA may be provided to the bezel area BZA, provided to an entire area of the transmission area TA, or provided to an entire area of the front surface IS. The electronic device ED may sense the fingerprint FNG provided to the fingerprint sensing area FRA.

The fingerprint FNG of the user may include a surface state of a hand of the user, e.g., surface uniformity, a surface unevenness shape, or the like. However, this is merely illustrative, and when an input of an intangible object is provided to the electronic device ED, the electronic device ED may even sense surface information of the intangible object.

When components of the electronic device ED are checked with reference to FIGS. 1B and 2, the electronic device ED may include a display device DD, an electronic module EM, a power supply module PM, a bracket BRK, and an external case EDC. The components are simply illustrated in FIGS. 1A and 1B.

The display device DD includes a window member WM and a display panel unit DU. As illustrated in FIG. 1A, the window member WM constitutes an appearance of the electronic device ED in a coupled state. The window member WM may be a component protecting internal components of the electronic device ED from an external impact, and substantially providing the display surface IS of the electronic device ED.

The display panel unit DU is disposed on a rear surface of the window member WM. The display panel unit DU may include a display panel DP and a fingerprint sensing unit FSU. The display panel DP may be a component that substantially generates the image IM. The image IM generated by the display panel DP may be displayed on the display surface IS and recognized by the user from the outside through the transmission area TA.

The fingerprint sensing unit FSU senses the fingerprint FNG of the user applied from the outside. As described above, the fingerprint sensing unit FSU may sense the fingerprint FNG of the user provided to the fingerprint sensing area FRA Detailed description regarding this will be described later.

The display panel unit DU may be electrically connected to an electronic module EM through a flexible circuit board (not shown). The display panel unit DU may receive information on the image IM to be displayed through the electronic module EM or provide information, which is processed by providing the sensed fingerprint FNG to the electronic module EM, to the user.

The power supply module PM provides power that is necessary to overall operations of the electronic device ED. The power supply module PM may include a typical battery module.

The bracket BRK is coupled with the display device DD and/or the external case EDC and divides an inner space of the electronic device ED. The bracket BRK provides a space in which other components are disposed. Also, the bracket BRK may support the display device DD so that the display device DD is fixed without being shaken. A coupling groove corresponding to a shape of the electronic module EM may be defined in the bracket BRK so that the electronic module EM is fixed. The bracket BRK includes a metal or plastic member. Although one bracket BRK is exemplarily illustrated, the electronic device ED may include a plurality of brackets BRK.

The external case EDC may be coupled to the bracket BRK and/or the display device DD. In the embodiment, the external case EDC provides the appearance of the electronic device ED in conjunction with the window member WM. Although the external case EDC having one body is exemplarily illustrated, the external case EDC may include a plurality of bodies that are assembled with each other. The external case EDC may include a plurality of frames and/or plates, which are made of glass, plastic, and metal.

The electronic module EM includes a motherboard and various functional modules mounted on the motherboard to operate the electronic device ED. The motherboard may be electrically connected to the display device DD through a connector (not shown). Here, the motherboard may include a rigid-type printed circuit board.

The electronic module EM may include a control module 10, a wireless communication module 20, an image input module 30, a sound input module 40, a sound output module 50, a memory 60, an external interface 70, a light emitting module 80, a light receiving module 90, a camera module 100, and the like. Some of the above-described modules may be electrically connected to the motherboard through a flexible circuit board instead of being mounted to the motherboard.

The control module 10 controls an overall operation of the electronic device ED. The control module 10 may be a microprocessor. For example, the control module 10 activates or deactivates the display device DD. The control module 10 may control the image input module 30, the sound input module 40, the sound output module 50, and the like on the basis of a touch signal received from the display module DM.

The wireless communication module 20 may transceive a wireless signal with another terminal by using Bluetooth or WiFi-link. The wireless communication module 20 may use a general communication line to transceive an audio signal. The wireless communication module 20 includes a transmitting part 22 modulating a signal to be transmitted and transmitting the modulated signal and a receiving part 24 demodulating a received signal.

The image input module 30 processes an image signal to convert the image signal into image data that is displayable on the display device DD. The sound input module 40 receives an external sound signal through a microphone in a recording mode or a voice recognition mode to convert the received sound signal into electrical voice data. The sound output module 50 converts sound data received from the wireless communication module 20 or sound data stored in the memory 60 and outputs the converted sound data to the outside.

The external interface 70 serves as an interface connected to an external charger, a wire/wireless data port, a card socket (e.g., a memory card socket and a SIM/UIM card socket), or the like.

The light emitting module 80 generates and outputs light. The light emitting module 80 may output infrared light. The light emitting module 80 may include a LED element. The light receiving module 90 may sense infrared light. The light receiving module 90 may be activated when infrared light having a predetermined level or more is sensed. The light receiving module 90 may include a CMOS sensor. Infrared light generated from the light emitting module 80 may be outputted and then reflected by an external object (e.g., a user's finger or face), and the reflected infrared light may be incident into the light receiving module 90. The camera module 100 photographs an external image.

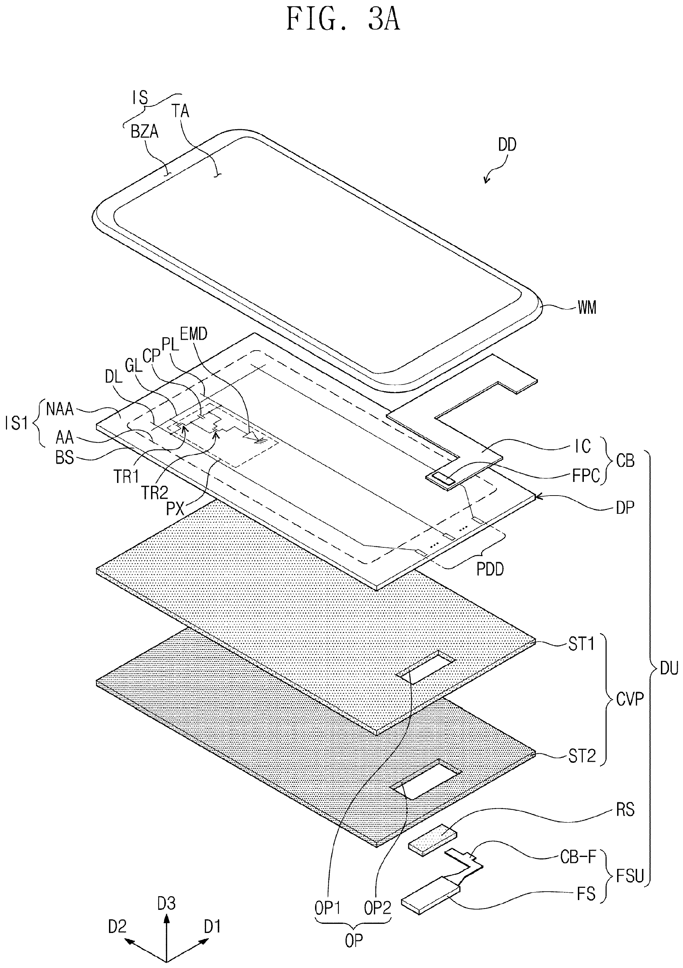

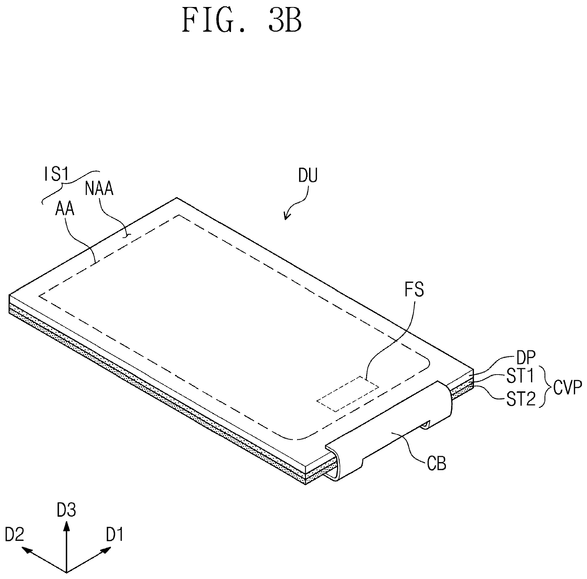

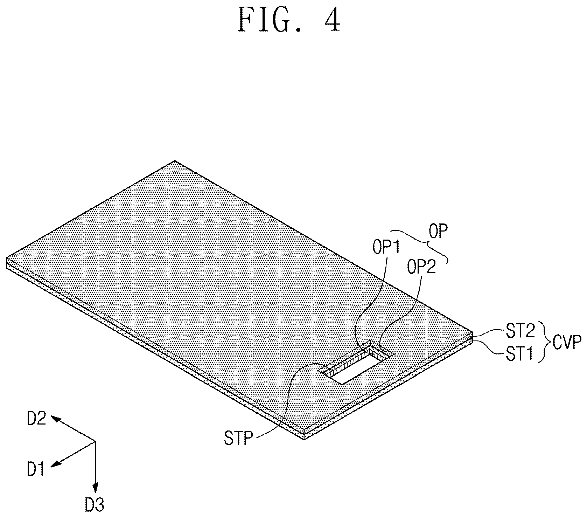

FIG. 3A is an exploded perspective view illustrating a portion of the components illustrated in FIG. 2A. FIG. 3B is a coupling perspective view illustrating a portion of the components illustrated in FIG. 3A. FIG. 4 is a coupling perspective view illustrating a portion of the components illustrated in FIG. 3A. FIG. 3A illustrates an exploded perspective view of the display device DD, and FIG. 3B illustrates a coupling perspective view of the display panel unit DU except for the window member WM. FIG. 4 illustrates a perspective view of a rear surface of a cover panel CVP. Hereinafter, the present invention will be described with reference to FIGS. 3A to 4.

The display device DD may include a window member WM and a display panel unit DU. Specifically, the display panel unit DU includes a display panel DP, a circuit board CV, a cover panel CVP, a fingerprint sensing unit FSU, and an adhesive member RS.

As described above, the window member WM includes a front surface including a transmission area TA that is optically clear and a bezel area BZA disposed adjacent to the transmission area TA. Hereinafter, since the window member WM corresponds to the window member WM in FIG. 2A, overlapped description will be omitted.

The display panel DP includes a base substrate BS, a plurality of signal lines DL, GL, and PL, a plurality of pixels PX, and a plurality of display pads PDD. In the embodiment, a signal circuit diagram of one pixel PX is simply illustrated for easy description.

The base substrate BS includes a front surface IS1 and a rear surface (not shown), which are opposed to each other in the third direction D3. The front surface IS1 is divided into an active area AA and a peripheral area NAA on a plane. In the embodiment, a rear surface of the base substrate BS may be provided as a rear surface of the display panel DP.

The active area AA may be an area on which the image IM (refer to FIG. 1) is displayed. The display panel DP activates the active area AA according to an electrical signal. The image IM is displayed on the activated active area AA. The transmission area TA may overlap at least the entire active area AA.

The peripheral area NAA is disposed adjacent to the active area AA. The peripheral area NAA may surround an edge of the active area AA. However, this is merely illustrative, and the peripheral area NAA may be adjacent to only a portion of the edge of the active area AA and not be limited to any one embodiment.

All sorts of signal lines, electronic elements, or the like, which provide an electrical signal to the active area AA, may be disposed on the peripheral area NAA. The peripheral area NAA may be covered by the bezel area BZA and may not be recognized from the outside.

The plurality of signal lines GL, DL, and PL, the pixel PX, and the plurality of display pads PDD are disposed on the front surface IS1 of the base substrate BS. The signal lines GL, DL, and PL may include a gate line GL, a data line DL, and a power line PL. The gate line GL, the data line DL, and the power line PL may transmit different electrical signals from each other.

The gate line GL extends in the first direction D1. Although the gate line GL may be provided in plurality, and a plurality of gate lines may be spaced apart from each other in the second direction D2, the single gate line GL is exemplarily illustrated for easy description.

On the other hand, although not shown, the display panel unit DU may further include a gate driving circuit mounted to the front surface IS1 of the base substrate BS and providing an electrical signal to the gate line GL. Here, a gate driving circuit pad providing an electrical signal to the gate driving circuit may constitute any one of the display pads PDD. Alternatively, the display panel DP may further include gate pads that are electrically connected with the gate driving circuit provided at the outside. The gate pads may constitute any one of the display pads PDD.

The data line DL extends in the second direction D2. The data line DL may be electrically connected with the gate line GL. Although the data line DL may be provided in plurality, and a plurality of data lines may be spaced apart from each other in the first direction D1, the single data line DL is exemplarily illustrated for easy description. The data line DL is connected to a data pad constituting any one of the pads PDD. The data line DL provides a data signal received through the data pad to the pixel PX.

The power line PL extends in the second direction D2. The power line PL may be electrically connected with the gate line GL and the data line DL. Although the power line PL may be provided in plurality, and a plurality of power lines may be spaced apart from each other in the first direction D1, the single power line PL is exemplarily illustrated for easy description. The power line PL may provide a power signal to the pixel PX.

The pixel PX is displayed on the active area AA. Although the pixel PX may be provided in plurality, and a plurality of pixels may be connected to the signal lines, respectively, the single pixel PX is exemplarily illustrated for easy description. The pixel PX displays light to realize the image IM according to an electrical signal.

The pixel PX may include a first thin-film transistor TR1, a second thin-film transistor TR2, a capacitor CP, and a light emitting element EMD. The first thin-film transistor TR1, the second thin-film transistor TR2, the capacitor CP, and the light emitting element EMD are electrically connected to each other. On the other hand, although the entire pixel PX is disposed within the active area AA in the embodiment, the embodiment of the present invention is not limited thereto. For example, the first thin-film transistor TR1, the second thin-film transistor TR2, and the capacitor CP may be disposed on the peripheral area NAA, and not be limited to any one embodiment.

The first thin-film transistor TR1 may be a switching element controlling turn-on and turn-off of the pixel PX. The first thin-film transistor TR1 is connected to the gate line GL and the data line DL. The first thin-film transistor TR1 is turned-on by a gate signal provided through the gate line GL and provide a data signal provided through the data line DL to the capacitor CP.

The capacitor CP charges a voltage corresponding to a potential difference between a first power signal provided from the power line PL and a signal provided from the first thin-film transistor TR1. A second thin-film transistor TR2 provides a first power signal provided from the power line PL to the light emitting element EMD in correspondence to the voltage charged in the capacitor CP.

The light emitting element EMD may generate light or control a light amount according to an electrical signal. For example, the light emitting element EMD may include an organic light emitting element, a quantum dot light emitting element, an electrophoretic element, or an electrowetting element.

The light emitting element EMD is connected with a power terminal VSS and receives a power signal different from the power signal provided by the power line PL. A driving current corresponding to a difference between a second power signal and an electrical signal provided from the second thin-film transistor TR2 may flow through the light emitting element EMD, and the light emitting element EMD may generate light corresponding to the driving current.

However, this is merely illustrative, and the pixel PX may include electronic elements having various configurations and arrangements and not be limited to any one embodiment.

The pads PD is disposed on the peripheral area NAA. The pads PD may be connected to the signal lines, respectively. The pixels PX may be electrically connected with elements disposed outside the display panel DP through the pads PD.

The circuit board CB is connected to the pads PD. The circuit board CB provide an electrical signal to the display panel DP through the pads PD. The circuit board CB may generate a signal controlling the image IM or a power signal and provide the generated signal to the display panel DP. The circuit board CB may include a flexible substrate FCB and a driving element IC.

The flexible substrate FCB may be electrically connected to the display panel DP through the display pads PDD. The flexible substrate FCB is electrically and physically coupled to the display panel DP through an adhesive member (not shown) (e.g., an anisotropic conductive film). The flexible substrate FCB may include signal lines (not shown).

The driving circuit IC may be mounted on the flexible substrate FCB. The driving element IC may be connected to the signal lines of the flexible substrate FCB and electrically connected to the display panel DP. The driving element IC generates or processes all sorts of electrical signals.

The circuit board CB may be coupled to the display panel DP and then bent toward the rear surface of the base substrate BS. Thus, the driving element IC may not be recognized when viewed from the front surface of the display panel unit DU.

The cover panel CVP may be coupled to the rear surface of the display panel DP. The cover panel CVP may include a first sheet ST1 and a second sheet ST2. The first sheet ST1 covers the rear surface of the display panel DP. The first sheet ST1 may be attached to the display panel DP through an adhesive member (not shown).

The first sheet ST1 may include a front surface having a tiny waviness. For example, the first sheet ST1 may include an embossed sheet. The first sheet ST1 may have a wavy front surface facing the display panel DP. The waviness provided to the first sheet ST1 may prevent ununiform bubble formation between the display panel DP and the first sheet ST1 and improve a coupling force between the display panel DP and the first sheet ST1.

The second sheet ST2 is disposed below the first sheet ST1. The second sheet ST2 may be a cushion sheet. Specifically, the second sheet ST2 may include a sponge, a foam, or a urethane resin. The second sheet ST2 protects the display panel DP by absorbing an external impact applied to the rear surface of the display panel DP. The second stage ST2 may be directly provided to the first sheet ST1 or coupled to the first sheet through a separate adhesive layer.

However, this is merely illustrative, and the cover panel CVP may further include an additional sheet in addition to the first sheet ST1 or the second sheet ST2 and not be limited to any one embodiment.

In the embodiment, a predetermined opening part OP may be defined in the cover panel CVP. The opening part OP overlaps the active area AA on the plane. The opening part OP may be defined by passing through the cover panel CVP in the third direction D3. Specifically, the opening part OP may pass through the first sheet ST1 and the second sheet ST2 to expose the rear surface of the display panel DP. The opening part OP includes a side surface having a step STP.

The opening part OP includes a first opening part OP1 and a second opening part OP2. The first opening part OP1 passes through the first sheet ST1. The second opening part OP2 passes through the second sheet ST2. The second opening part OP2 may be defined as a position overlapping the first opening part OP1.

The first opening part OP1 may have a planar size less than that of the second opening part OP2. In the embodiment, each of the first opening part OP1 and the second opening part OP2 has a rectangular shape. The first opening part OP1 may have a rectangular shape greater in size than that of the second opening part OP2. However, this is merely illustrative, and each of the first opening part OP1 and the second opening part OP2 may have various shapes and not be limited to any one embodiment.

As a side surface of the first opening part OP1 is connected with a side surface of the second opening part OP2, the side surface of the opening part is defined. Thus, the opening part OP may include the side surface having the step STP. In FIG. 4, the step STP is hatched for easy description. As the cover panel CVP according to the present invention includes the opening part OP having the side surface in which the step STP is defined, an external light visible phenomenon at the rear surface of the display panel DP may be relieved. Detailed description regarding this will be described later.

The fingerprint sensing unit FSU may be disposed on the rear surface of the display panel DP. The fingerprint sensing unit FSU may include a fingerprint sensor FS and a sensing circuit board CB-F. The sensing circuit board CB-F is electrically connected with the fingerprint sensor FS.

The fingerprint sensor FS may include sensors that are driven in various methods. For example, the fingerprint sensor FS may include an optical-type fingerprint sensor that senses incident light by using an optical sensor and an ultrasonic-type fingerprint sensor that senses a vibration by using a piezoelectric body. However, the embodiment of the present invention is not limited to any one driving method.

The adhesive member RS is disposed on the rear surface of the display panel DP. The adhesive member RS is accommodated in the opening part OP. The adhesive member RS is disposed between the display panel DP and the fingerprint sensing unit FSU. Specifically, the adhesive member RS is disposed in the first opening part OP1 to couple the display panel with the fingerprint sensing unit FSU.

In the embodiment, the adhesive member RS may have a planar size less than that of the fingerprint sensor FS. Thus, the adhesive member RS and the fingerprint sensor FS may provide a step on the plane.

The adhesive member RS includes an adhesive material. The adhesive material may include a resin. The adhesive member RS may be provided in various types. For example, the adhesive member RS may be provide in a liquid state and then cured or provided as a sheet such as a double-sided tape to couple the display panel DP with the fingerprint sensor FS.

The adhesive member RS may be optically clear. For example, the adhesive member RS may include an optical clear resin (OCR), an optical clear adhesive (OCA), or a pressure sensitive adhesive (PSA). When the fingerprint sensor FS is driven by an optical method, as a transparency of the adhesive member RS increases, a fingerprint sensitivity of the fingerprint sensor FS may improve.

Alternatively, the adhesive member RS may be optically unclear. When the fingerprint sensor FS is driven by an ultrasonic method, the fingerprint sensor FS may provide a stable fingerprint sensitivity to the user regardless of the transparency of the adhesive member S. The adhesive member RS according to an embodiment of the present invention may be provided in various kinds according to the driving method of the fingerprint sensor FS, and not be limited to any one embodiment.

The fingerprint sensor FS according to an embodiment of the present invention is in the opening part OP defined in the cover panel CVP. The fingerprint sensor FS is disposed on the rear surface of the display panel DP and accommodated in the opening part OP. The fingerprint sensor FS may overlap the display panel DP on the plane. In FIG. 3B, an area on which the fingerprint sensor FS is disposed is illustrated by a dotted line for easy description. According to the present invention, in the embodiment, the fingerprint sensor FS may overlap the active area AA. As the fingerprint sensor FS is provided in the active area AA, fingerprint information of an external input applied to the active area AA may be easily sensed, and an additional fingerprint sensing area may not be provided to reduce the bezel.

According to the present invention, as the first opening part OP1 and the second opening part OP2, which have different sizes, are defined, the opening part OP has the side surface having the predetermined step STP. A step ST define din the cover panel CVP may relieve a rear surface visible phenomenon of the display panel PD caused by light leakage to a space between the fingerprint sensing unit FSU and the opening part OP. Thus, the electronic device having an improved display characteristic may be provided. Detailed description regarding this will be described later.

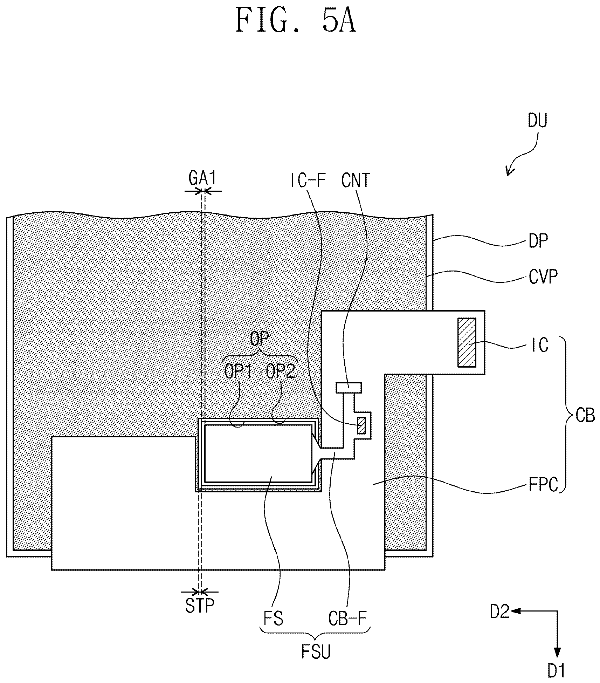

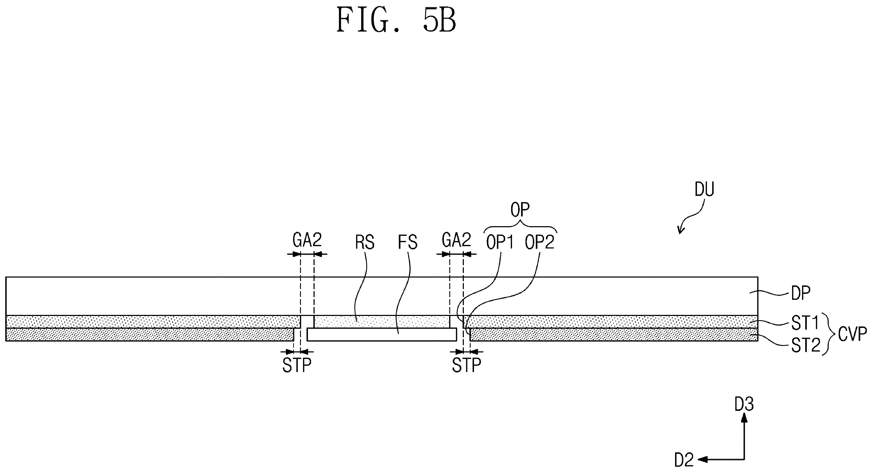

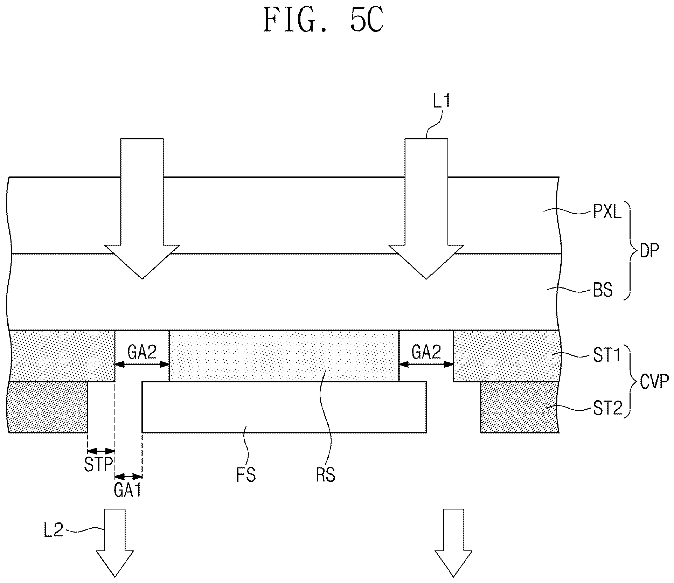

FIG. 5A is a rear view illustrating a portion of the display panel unit according to an embodiment of the present invention. FIGS. 5B and 5C are cross-sectional views illustrating the display panel unit according to an embodiment of the present invention. For easy description, a portion of components are omitted in FIGS. 5B and 5C for easy description. Also, in FIG. 5C, a portion of the display panel unit is enlargedly illustrated, and a degree of transmission of light is illustrated. Hereinafter, the present invention will be described with reference to FIGS. 5A to 5C. Here, the same components as those described in FIGS. 1A to 4 are designated by the same reference symbols, respectively, and overlapped description thereof will be omitted.

As illustrated in FIG. 5A, the circuit board CB may be bent from one side of the display panel DP and disposed on the rear surface of the display panel. The driving element IC may be recognized from a rear surface of the display panel unit DC. Here, the circuit board CB may be bent while covering a portion of a rear surface of the second sheet ST2 of the cover panel CVP.

On the other hand, the sensing circuit board CB-F may be connected to the circuit board CV and electrically connected with the circuit board CB. In the embodiment, the sensing circuit board CB-F may be connected to the circuit board CB through a predetermined connector CNT disposed on the circuit board CB. Thus, the fingerprint sensor FS may be electrically connected with the circuit board CB and substantially transceive an electrical signal with the display panel DP. On the other hand, although the predetermined driving element IC-F is illustrated to be mounted to the sensing circuit board CB-F, this is merely illustrative, and the driving element IC-F may be omitted from the sensing circuit board CB-F and not be limited to any one embodiment.

The sensing circuit board CB-F may be partially accommodated in the opening part OP. For example, a portion of a side, which is connected to the fingerprint sensor FS, of the sensing circuit board CB-F may overlap the first opening part OP1 and the second opening part OP2. The rest portion of the sensing circuit board CB-F may extend to an outside of the second opening part OP2 and be connected to the display circuit board CB. However, this is merely illustrative, and the entire sensing circuit board CB-F may be accommodated in the opening part OP defined in the cover panel CVP according to a shape and a size of the sensing circuit board CB-F and not be limited to any one embodiment.

The fingerprint sensor FS is accommodated in the opening part OP of the cover panel CVP. The opening part OP of the cover panel CVP may have a size enough to accommodate the fingerprint sensor FS. The fingerprint sensor FS may be spaced apart from each of the first opening part OP1 and the second opening part OP2 on the plane. When the rear surface of the cover panel CVP is viewed, a predetermined spaced space GA (hereinafter, referred to as a first gap) may be defined between the fingerprint sensor FS and the side surface of the first opening part OP1. The first gap GA1 may be defined along an edge of the fingerprint sensor FS. The first gap GA1 may have a constant width along the edge of the fingerprint sensor FS or a variable width, and not be limited to any one embodiment.

The step STP is provided by a size difference between the first opening part OP1 and the second opening part OP2. The step STP is defined along an edge of the first gap GA1.

Specifically, referring to FIG. 5C, the adhesive member RS may be accommodated in the first opening part OP1, and the fingerprint sensor FS may be accommodated in the second opening part OP2. The adhesive member RS is accommodated in the opening part OP to couple the fingerprint sensor FS and the display panel DP in the opening part OP. The step STP of the cover panel CVP may prevent interference between the fingerprint sensor FS and the cover panel CVP.

In the embodiment, the adhesive member RS may be spaced apart from the side surface of the first opening part OP1. A predetermined spaced space GA2 (hereinafter, referred to as a second gap) may be defined between the adhesive member RS and the side surface of the first opening part OP1. The second gap GA2 may be defined along an edge of the adhesive member RS on the plane. The second gap GA2 may have a constant width along the edge of the adhesive member RS or a variable width, and not be limited to any one embodiment.

First light L1 traveling toward the rear surface of the display panel DP is incident to the second gap GA2 between the fingerprint sensor FS and the first opening part OP1 of the opening part OP. The display panel DP includes a base substrate BS and a pixel layer PXL. The rear surface of the display panel DP may be defined by the rear surface of the base substrate BS. The pixel layer PXL may include the above-described plurality of pixels PX (refer to FIG. 3A).

The first light L1 may include natural light incident from the outside and/or light generated from the pixel layer PXL. At least a portion of the second gap GA2 between the fingerprint sensor FS and the first opening part OP1 may be blocked by the fingerprint sensor FS. Light passes through the second gap GA2 and then passes through the first gap GA1. Since the first gap GA1 has a width that is relatively narrower than that of the second gap GA2, second light L2 passing through the opening part OP and emitted to the rear surface of the cover panel CVP may have a light amount that is relatively less than that of the first light L1.

As the light amount of the second light L1 increases, a boundary of each of the cover panel CVP, the opening part OP, and the fingerprint sensor FS disposed on the rear surface of the display panel DP is easily recognized. That is, as the light amount of the second light L1 increases, the rear surface visible phenomenon of the display panel DP may increase.

According to the present invention, as the first opening part OP1 having a size less than the second opening part OP2 is defined in the first sheet ST1 adjacent to the display panel DP, light incident from the front surface of the display panel DP or light that is self-generated from the display panel DP may reduce a light amount transmitted through the opening part OP. The step STP defined in the opening part OP blocks continuity between a space in the first opening part OP1 and a space in the second opening part OP2. Thus, the first gap GA1 and the second gap GA2 have different sizes. According to the present invention, as the step STP is defined in the opening part OP, interference between the fingerprint sensing unit FSU and the second sheet ST2 may be minimized, and a space between the adhesive member RS or the fingerprint sensor FS and the cover panel CVP in the opening part OP may be reduced. Thus, the rear surface visible phenomenon of the display panel DP through the space between the fingerprint sensor FS and the cover panel CVP in the opening part OP may be prevented.

According to the present invention, the rear surface visible phenomenon of the display panel DP at an area adjacent to the fingerprint sensor FS may be easily prevented. Thus, an outdoor visibility of the electronic device ED may be enhanced, and a display characteristic may improve.

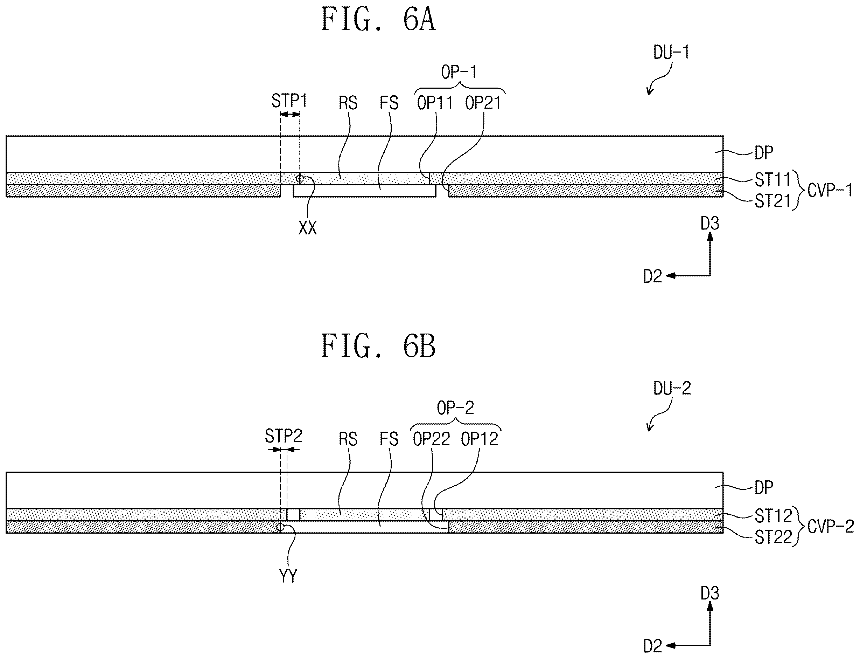

FIGS. 6A to 6C are cross-sectional views of display panel units according to an embodiment of the present invention. For easy description, cross-sectional views of the display panel units DU1, DU2, and DU3 corresponding to the area illustrated in FIG. 5B are illustrated in FIGS. 6A to 6C. Hereinafter, the present invention will be described with reference to FIGS. 6A to 6C. On the other hand, the same components as those described in FIGS. 1A to 5C are designated by the same reference symbols, respectively, and overlapped description thereof will be omitted.

As illustrated in FIG. 6A, in a display panel unit DU-1, a first sheet ST11 may contact an adhesive member RS. The adhesive member RS may have the same planar shape as the first opening part OP11. As a side surface of the first opening part OP11 contacts a side surface of the adhesive member RS, a contact surface XX may be provided to surround the adhesive member RS. A second opening part OP21 exposes at least a portion of the first opening part OP11. Thus, an opening part OP-1 defined in the cover panel CVP-1 has a step STP1.

In the embodiment, at least a portion of a fingerprint sensor FS may be supported by the first sheet ST11. The fingerprint sensor FS may be spaced apart from a side surface of the second opening part OP21. That is, the fingerprint sensor FS may have a planar size less than that of the second opening part OP21.

According to the present invention, as the first opening part OP11 is entirely filled by the adhesive member RS, a spaced space between the first opening part OP11 and the adhesive member RS is removed. Thus, although a predetermined spaced space exists between the second opening part OP21 and the fingerprint sensor FS, as a spaced space for light transmission in the first opening part OP11 is removed, the rear surface visible phenomenon of the display panel DP may be stably resolved.

Referring to FIG. 6B, in a display panel unit DU-2, a second sheet ST22 may contact a fingerprint sensor FS. Specifically, a second opening part OP22 may have a planar size corresponding to that of the fingerprint sensor FS. A side surface of the second opening part OP22 may provide a contact surface YY with the fingerprint sensor FS to surround the fingerprint sensor FS.

A first opening part OP12 passes through a first sheet ST12. The first opening part OP12 is connected with the second opening part OP22 to provide a step STP2 of an opening part OP2. An adhesive member RS may be spaced apart from a side surface of the first opening part OP12. A predetermined spaced space is defined between the adhesive member RS and the first opening part OP12.

According to the present invention, although a predetermined space GA is defined in the first opening part OP12, as a side surface of the second opening part OP21 contacts the fingerprint sensor FS, light transmission at the opening part OP-2 of a cover panel CVP may be reduced. Thus, the rear surface visible phenomenon of the display panel DP may be stably resolved.

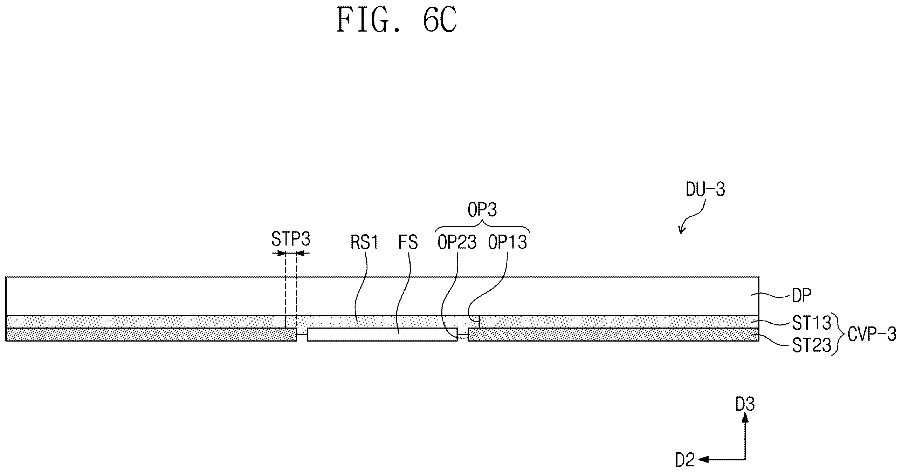

Referring to FIG. 6C, in a display panel unit DU-3, an opening part OP-3 may be filled by an adhesive member RS-1. Specifically, the adhesive member RS-1 may fill a first opening part OP13 and a spaced space between a side surface of a second opening part OP23 and a fingerprint sensor FS. Thus, a step STP3 define din the opening part OP-3 may be covered by the adhesive member RS-1.

According to the present invention, as the spaced space between the fingerprint sensor FS and the opening part OP-3 is filled by the adhesive member RS-1, the rear surface visible phenomenon of the display panel DP through the opening part OP-3 may be easily resolved.

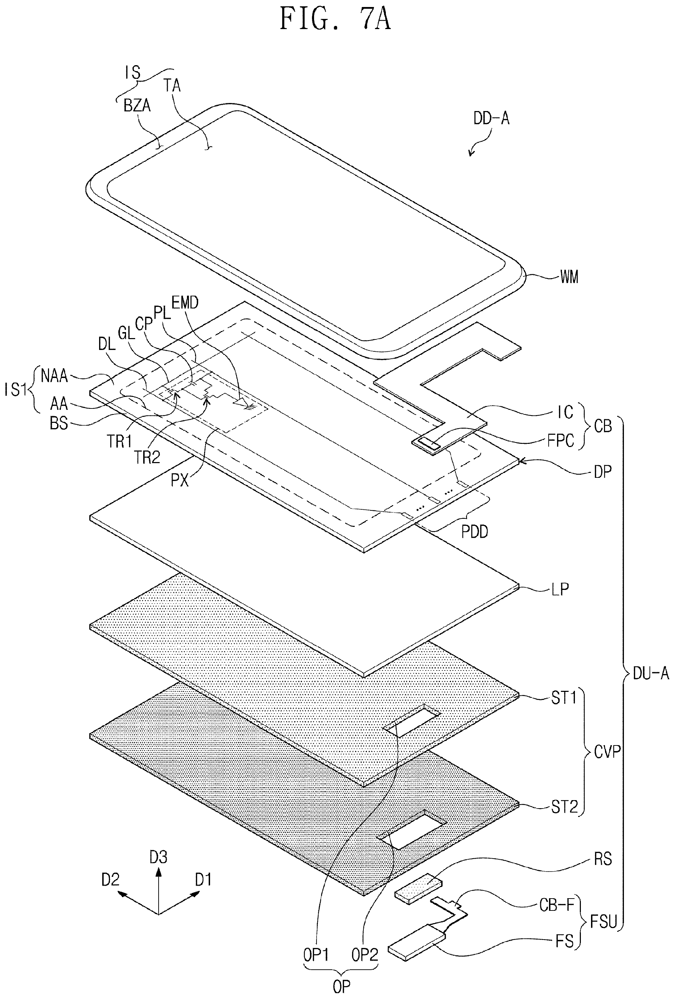

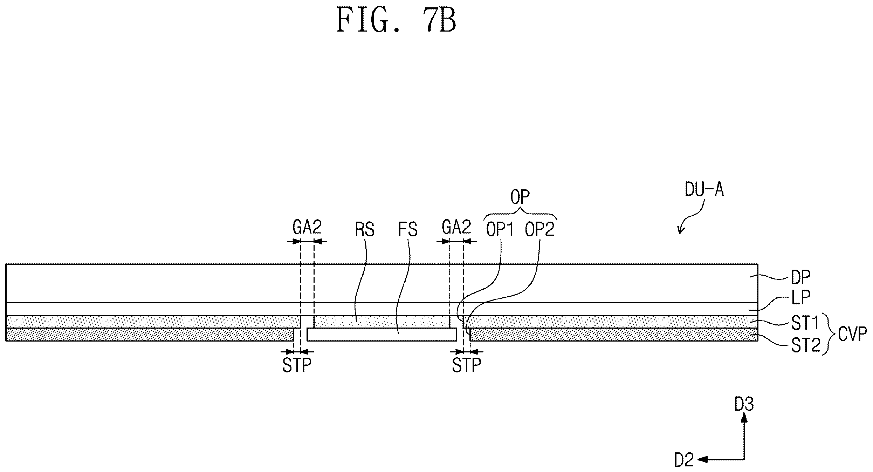

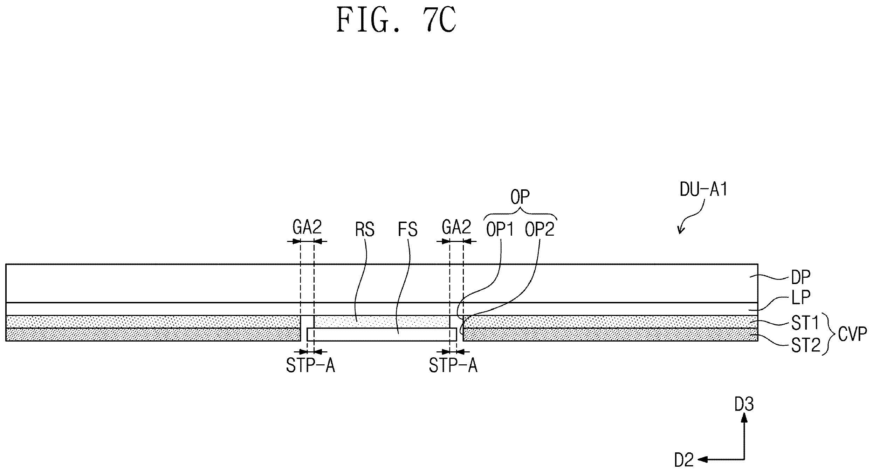

FIG. 7A is an exploded perspective view of a display device according to an embodiment of the present invention. FIG. 7B is a cross-sectional view illustrating a portion of components in FIG. 7A. FIG. 7C is a cross-sectional view illustrating a display panel unit according to an embodiment of the present invention. For easy description, FIG. 7A illustrates components corresponding those in FIG. 3A, FIG. 7B illustrates a display panel unit DU-A, and FIG. 7C illustrates a display panel unit DU-A1, wherein a portion of components are omitted in each of FIGS. 7A to 7C. Hereinafter, the present invention will be described with reference to FIGS. 7A to 7C. On the other hand, the same components as those described in FIGS. 1A to 6C are designated by the same reference symbols, respectively, and overlapped description thereof will be omitted.

As illustrated in FIGS. 7A and 7B, a display device DD-A may include a display panel DU-A further including a lower panel LP. The lower panel LP is disposed between a cover panel CVP and a display panel DP. The lower panel LP may contact a rear surface of the display panel DP. Here, although not shown, the lower panel LP may be attached to the rear surface of the display panel DP through an adhesive member that is separately provided.

The lower panel LP may include metal and/or an alloy. The lower panel LP may have a heat generation property. For example, the lower panel LP may include metal having a high thermal conductivity. Alternatively, for example, the lower panel LP may have a high modulus. For example, the lower panel LP may include stainless steel such as SUS having a high rigidity.

In the embodiment, the lower panel LP may have a high reflectance. Thus, the lower panel LP may reflect most of light incident to the lower panel LP.

On the other hand, as illustrated in FIG. 7C, in a display panel unit DU-A1, a step of an opening part OP-A may be omitted. Here, a side surface of a first opening part OP1A and a side surface of a second opening part OP2A may be aligned on a cross-section. However, a step STP-A may be defined between a fingerprint sensor FS and an adhesive member RS in the opening part OP-A. The step STP-A may partially block a continuity of a spaced space GA2 existing in the first opening part OP1A. According to the present invention, as a lower panel LP has a high reflectance, light incident to a cover panel CVP may be easily blocked.

According to the present invention, as the lower panel LP is further contained, a light amount emitted to a rear surface of the display panel DP may be reduced to easily resolve the rear surface visible phenomenon of the display panel DP.

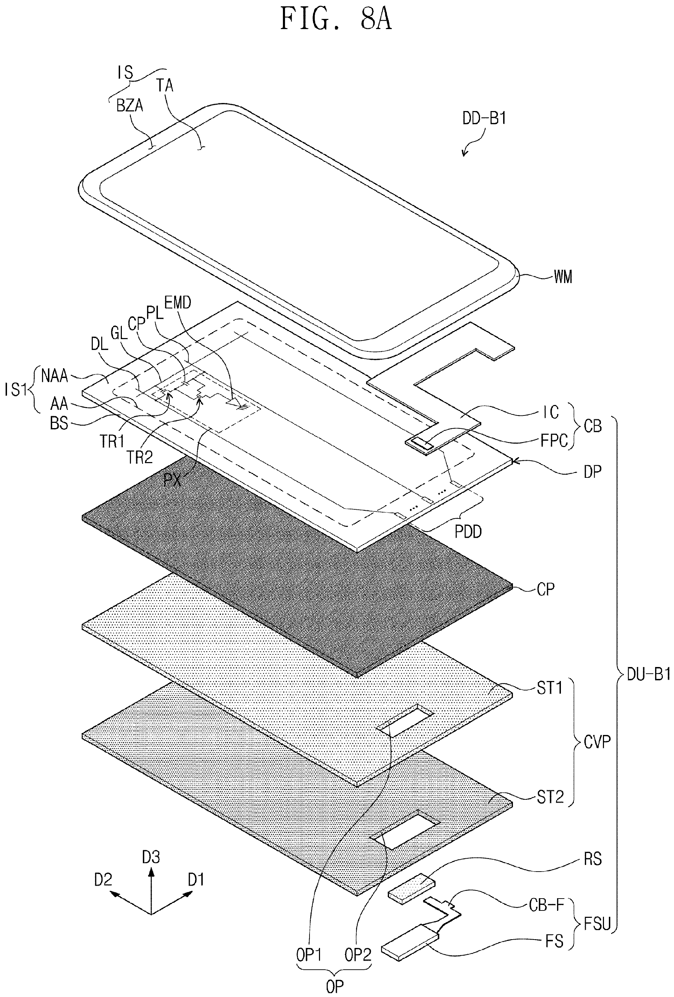

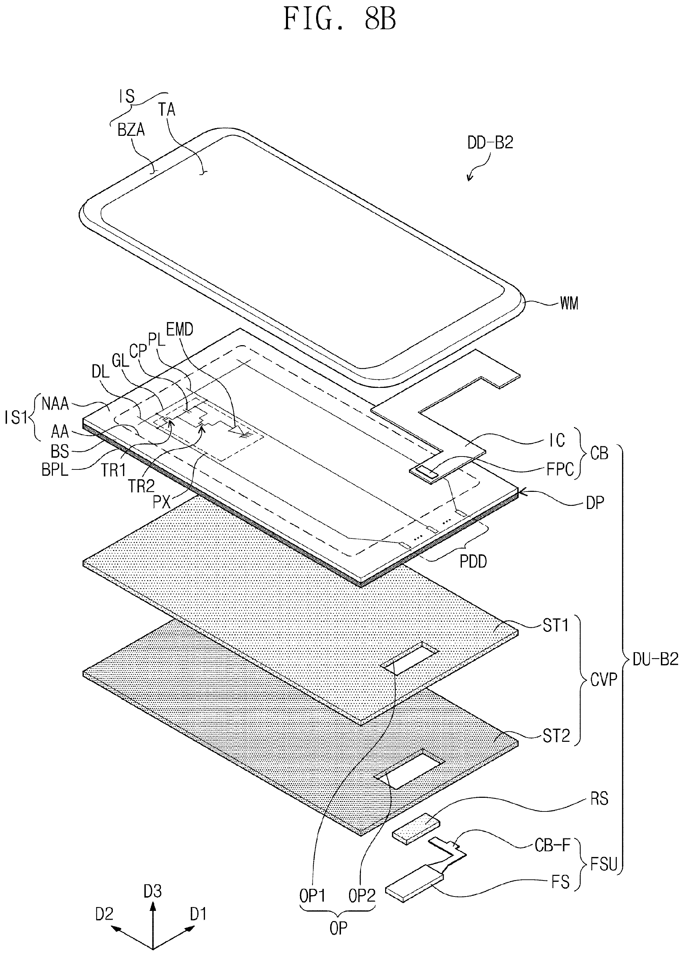

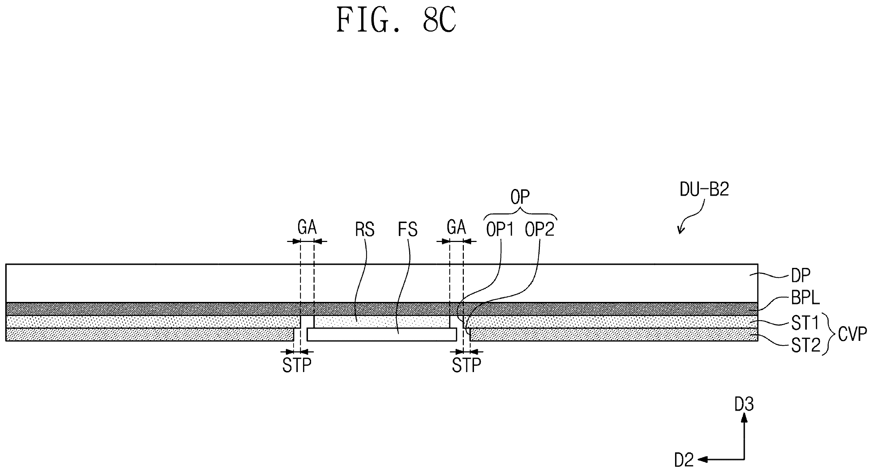

FIG. 8A is an exploded perspective view of a display device according to an embodiment of the present invention. FIG. 8B is a cross-sectional view illustrating a portion of components in FIG. 8A. FIG. 8C is a cross-sectional view illustrating a portion of components of the display device according to an embodiment of the present invention. For easy description, FIG. 8A illustrates components corresponding to those in FIG. 7A, and FIGS. 8B and 8C illustrates components corresponding those in FIG. 7B. Hereinafter, the present invention will be described with reference to FIGS. 8A to 8C. Here, the same components as those described in FIGS. 1A to 7B are designated by the same reference symbols, respectively, and overlapped description thereof will be omitted.

As illustrated in FIG. 8A, a display device DD-B 1 may further include a first rear surface cover layer CP disposed between a display panel DP and a cover panel CVP. The first rear surface cover layer CP may be a panel having a plate shape that is provided independently from the display panel DP. The first rear surface cover layer CP may be assembled in a state in which the first rear surface cover layer CP contacts a rear surface of the display panel DP or attached to the rear surface of the display panel DP through an adhesive member (not shown).

Alternatively, as illustrated in FIG. 8B, a display device DD-B2 may further include a second rear surface cover layer BPL disposed on a rear surface of a display panel DP. The rear surface cover layer BPL may be disposed on a rear surface of a base substrate BS of the display panel DP to entirely cover the rear surface of a base substrate BS. The second rear surface cover layer BPL may be a coating layer. The second rear surface cover layer BPL may be directly provided on the rear surface of a base substrate BS through a process such as coating/deposition/printing. The second rear surface cover layer BPL may have a color projected to a base substrate BS. Thus, the base substrate BS may exhibit an effect of substantially having a black color.

However, this is merely illustrative, and the base substrate BS according to an embodiment of the present invention may have own predetermined color. For example, the base substrate BS may have a color having a low light transmittance such as a black color. Here, the second rear surface cover layer BPL may be omitted.

FIG. 8C illustrates a cross-sectional view of the display panel unit including the second rear surface cover layer BPL. However, this is merely illustrative, and a cross-sectional view of the display panel unit including the first rear surface cover layer CP may be also illustrated in correspondence thereto. Hereinafter, the first rear surface cover layer LP-B and the second rear cover layer BPL will be described.

Each of the first rear surface cover layer LP-B and the second rear cover layer BPL may have a predetermined color. Each of the first rear surface cover layer LP-B and the second rear cover layer BPL may have a color having a high light absorption rate. For example, each of the first rear surface cover layer LP-B and the second rear cover layer BPL may have a black color. Thus, as a light amount emitted to a rear surface of the display panel DP is reduced, the rear surface visible phenomenon of the display panel DP may be stably prevented.

On the other hand, a base substrate BS may have a predetermined color. Here, as the light amount emitted to the rear surface of the display panel DP is further reduced, a display characteristic of the display panel DP may improve.

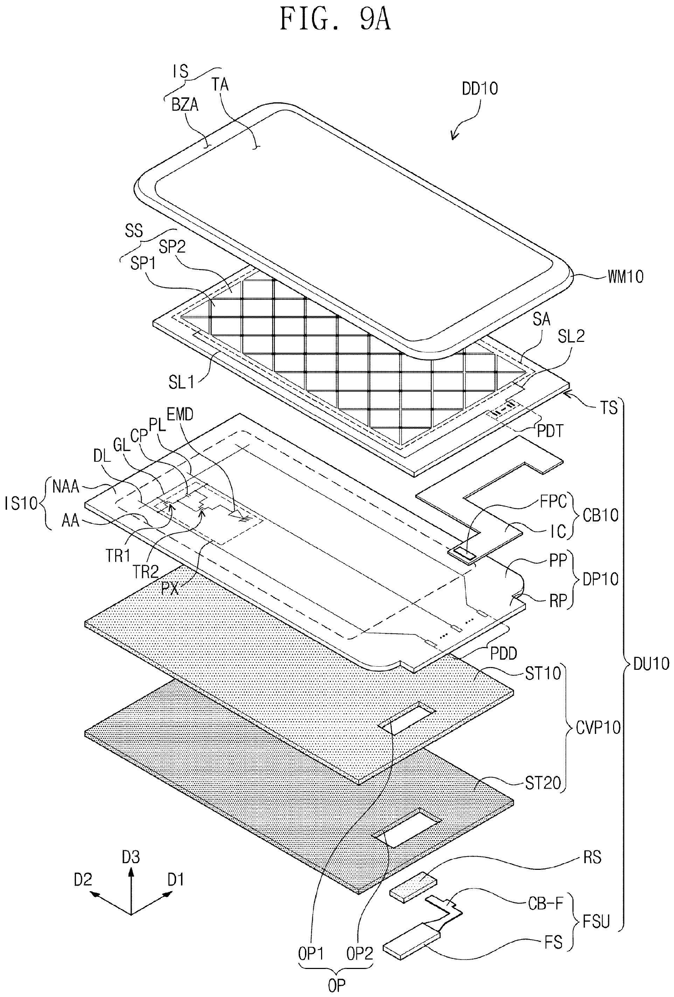

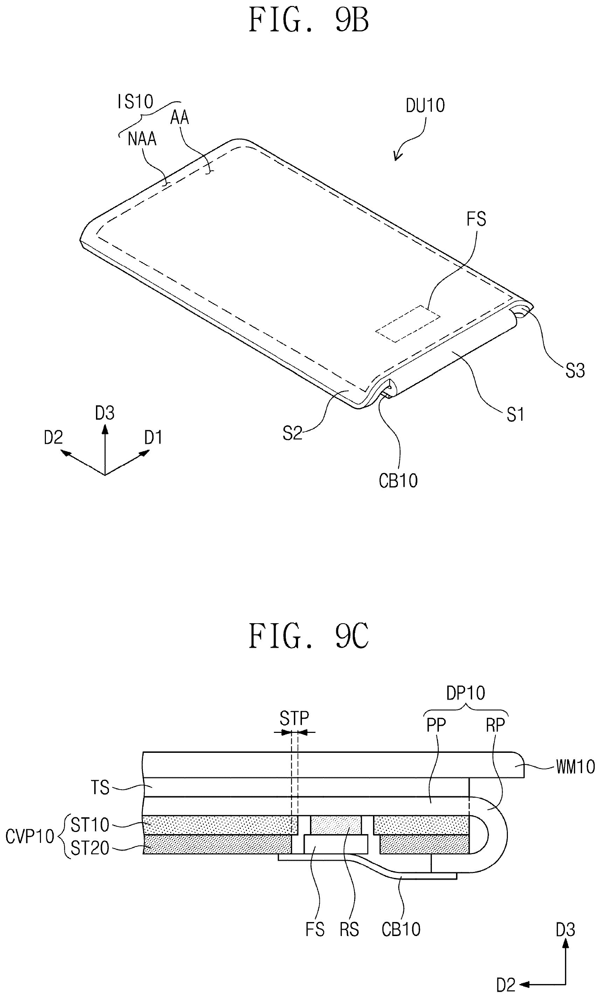

FIG. 9A is an exploded perspective view of a display device according to an embodiment of the present invention. FIG. 9B is a coupling perspective view of a display panel unit according to an embodiment of the present invention. FIG. 9C is a side view of the display device in FIG. 9A. Hereinafter, the present invention will be described with reference to FIGS. 9A to 9C. Here, the same components as those described in FIGS. 1A to 8B are designated by the same reference symbols, respectively, and overlapped description thereof will be omitted.

As illustrated in FIG. 9A, a display device DD10 includes a window member WM and a display panel unit DU10. Since the window member WM corresponds to the window member WM in FIG. 1A, overlapped description thereof will be omitted below.

The display panel unit DU10 may include a display panel DP10, a circuit board CB10, a touch sensor TS, a cover panel CVP, a fingerprint sensing unit FSU, and a light absorbing cover ABS. The display panel DP10 has a shape having one protruding side on the plane. In the embodiment, the display panel DP10 may include a planar part PP and a protruding part RP. The protruding part RP may have a protruding shape from one side of the planar part PP in the first direction D1. In the embodiment, pads PDD may be disposed on the protruding part RP. Here, since signal lines DL, GL, and PL, a pixel PX, and the pads PDD, which constitute the display panel DP10, correspond to the components of the display panel DP (refer to FIG. 3A) in FIG. 3A, overlapped description thereof will be omitted.

The touch sensor TS may be disposed on the display panel DP10. The touch sensor TS may sense an external input to acquire information on a position and an intensity of the external input. The external input external input may include various embodiments. For example, the external input includes various types of external inputs such as a portion of a user's body, light, heat, or pressure. Also, the touch sensor TS may sense an input approaching or being adjacent as well as an input contacting the touch sensor TS.

The touch sensor TS may include a sensing area SA and a non-sensing area NSA. The sensing area SA may overlap a display area DA. In the embodiment, an active area AA may include the sensing area SA and the display area DA.

The non-sensing area NSA is disposed adjacent to the sensing area SA. The non-sensing area NSA may surround an edge of the sensing area SA. However, this is merely illustrative, and the non-sensing area NSA may be disposed adjacent to only a portion of a side of the sensing area SA or omitted and not be limited to any one embodiment.

A sensing electrode SS is disposed on the sensing area SA. The sensing electrode SS may include a first sensing electrode SP1 and a second sensing electrode SP2, which receive different electrical signals. The sensing electrode SS may acquire information on an external input TC through a variation of a capacitance between the first sensing electrode SP1 and the second sensing electrode SP2.

The first sensing electrode SP1 extends in the second direction D2. The first sensing electrode SP1 may include a plurality of conductive patterns connected to each other in the second direction D2. The first sensing electrode SP1 may be provided in plurality and spaced apart from each other in the first direction D1.

The second sensing electrode SP2 extends in the first direction D1. The second sensing electrode SP2 may include a plurality of conductive patterns connected to each other in the first direction D1. The second sensing electrode SP2 may be provided in plurality and spaced apart from each other in the second direction D2.

Sensing lines SL1 and SL2 and sensing pads PDT are disposed on the non-sensing area NSA. The sensing pads PDT are connected to the sensing lines SL1 and SL2, respectively. The sensing lines SL1 and SL2 includes a first sensing line SL1 and a second sensing line SL2. The first sensing line SL1 connects the first sensing electrode SP1 and the sensing pad PDT and transmits an electrical signal provided from the outside through the sensing pad PDT to the first sensing electrode SP1. The second sensing line SL2 connects the second sensing electrode SP2 and the sensing pad PDT and transmits an electrical signal provided from the outside through the sensing pad PDT to the second sensing electrode SP2.

The sensing pad PDT may extend until one protruding side of the display panel DP10 and be electrically connected with the display panel DP10. Alternatively, the sensing pad PDT may be disposed on a different layer separately from the pads PDD of the display panel.

The touch sensor TS may be disposed directly on the display panel DP10. For example, the sensing electrode SS or the sensing lines SL1 and SL2 may be provided directly on the display panel DP10. Alternatively, the touch sensor TS may be provided separately from the display panel DP10, and then attached onto the display panel DP10 through an adhesive member (not shown). Alternatively, the touch sensor TS may be disposed on a rear surface of the display panel DP10 or embedded in the display panel DP10. The touch sensor TS according to an embodiment of the present invention may have various types and not be limited to any one embodiment.

The circuit board CB10 is coupled to one side of the display panel unit DU10. Specifically, the circuit board CB10 may be coupled to a first side S1 of the display panel unit DU10. The first side S1 of the display panel unit DU10 may correspond to the protruded protruding part RP of the display panel DP10. The circuit board CB10 is electrically connected to the pads PDD of the display panel. Also, the circuit board CB10 may be electrically coupled with the sensing pad PDT. Thus, the display panel DP10 and the touch sensor TS may be driven in one circuit board CB10. However, this is merely illustrative, and the circuit board CB10 may be separately provided to each of the display panel DP10 and the touch sensor TS and not be limited to any one embodiment.

As illustrated in FIGS. 9B and 9C, the first side S1 of the display panel unit DU10 may be bent in a direction opposed to the third direction D3, i.e., bent toward the rear surface of the display panel unit DU10. The protruding part RP may be bent from the planar part PP and disposed on the rear surface of the display panel DP10. The protruding part RP may correspond to the first side S1, and the first side S1 may be an area connected with the circuit board CB10 as described above.

As the first side S1 of the display panel unit DU10 is bent, the circuit board CB10 may be assembled in a state in which the circuit board CB10 is disposed on the rear surface of the display panel DP10. According to the present invention, although the circuit board CB10 is rigid, as one side of the display panel unit DU10 is bent, the circuit board CB10 may be disposed on the rear surface of the display panel DP10 and coupled thereto.

Also, the display panel unit DU10 may further include a plurality of bent sides. The display panel unit DU10 according to the embodiment has a second side S2 and a third side S3, which each extend in the first direction D1, are opposed to each other in the second direction D2, and are each bent in a direction opposed to the third direction D3. In the embodiment, a portion of a front surface IS10 of the display panel unit DU10 may be bent, and a portion of an active area AA, which is defined in each of the second side S2 and the third side S3, may be bent.

Thus, as the electronic device ED10 according to an embodiment of the present invention includes the display panel unit DU10 having at least one bent side, the display panel unit DU10 may reduce an area of a bezel area BZA and improve an esthetic sense. However, this is merely illustrative, and although at least one of the first side S1, the second side S2, and the third side S3 may not be bent, or all of four side surfaces of the display panel unit DU10 may be bent, the embodiment of the present invention is not limited to any one embodiment. The electronic device ED10 according to an embodiment of the present invention may include display panel units having various shapes and not be limited to any one embodiment.

According to the present invention, a cover panel CVP10 may be disposed at a position corresponding to the planar part PP and coupled with the display panel DP10. An opening part OP10 of the cover panel CVP10 may be defined at a position overlapping the planar part PP. Thus, the adhesive member RS and the fingerprint sensor FS may be disposed on a rear surface of the planar part PP.

A step STP defined in the cover panel CVP may be stably disposed on the display panel DP10, particularly the rear surface of the planar part PP. According to the present invention, although at least one side of the display panel unit DU10 is bent, a rear surface visible defect of the display panel DP10, which is generated in an area adjacent to the fingerprint sensor FS, may be resolved, and thus the electronic device ED10 having an improved display characteristic may be provided.

### INDUSTRIAL APPLICABILITY

As the electronic device includes the fingerprint sensing unit, the electronic device may sense fingerprint information of a user and, through this, provide various functions capable of organically communicating with the use to enhance affinity with the user. The present invention related to the electronic device including the fingerprint sensing unit has high industrial applicability.

## Claims

1. An electronic device (ED) comprising:
a display panel (DP) comprising a base substrate (BS) comprising a front surface and a rear surface opposed to the front surface and a plurality of pixels (PX) disposed on the front surface of the base substrate (BS) configured to display an image (IM);
a cover panel (CVP) spaced apart from the rear surface of the display panel (DP) and in which an opening part (OP) is defined; and
a fingerprint sensor (FS) spaced apart by a predetermined gap (GA1) from the cover panel (CVP) and accommodated in the opening part (OP),
wherein the opening part (OP) comprises a side surface having a step (STP), and
wherein a side surface of the fingerprint sensor (FS) faces apart from the step (STP) in a cross-sectional view,
the electronic device (ED) further comprising:
an adhesive member (RS) accommodated in the opening part (OP) and disposed between the fingerprint sensor (FS) and the display panel (DP),
a lower panel (LP) disposed between the cover panel (CVP) and the display panel (DP), and
the adhesive member (RS) couples the lower panel (LP) with the fingerprint sensor (FS),
wherein the lower panel (LP) contacts the rear surface of the display panel (DP),
wherein a planar size of the cover panel (CVP) is equal to or smaller than a planar size of the display panel (DP),
**characterized in that**
the fingerprint sensor (FS) overlaps a side surface of the adhesive member (RS) in a plan view and is disposed on the rear surface of the display panel (DP), and
the side surface of the opening part (OP) faces and is arranged apart from the side surface of the adhesive member (RS) in the plan view.

2. The electronic device (ED) of claim 1, wherein the cover panel (CVP) comprises:
a first sheet (ST1) disposed on the rear surface of the display panel (DP); and
a second sheet (ST2) disposed on a rear surface of the first sheet (ST1),
wherein the opening part (OP) comprises:
a first opening part (OP1) that passes through the first sheet (ST1); and
a second opening part (OP2) that passes through the second sheet (ST2) and is overlapped with the first opening part (OP1),
wherein the first opening part (OP1) has a planar size less than that of the second opening part (OP2) and greater than the fingerprint sensor (FS).

3. The electronic device (ED) of claim 2, wherein the first sheet (ST1) comprises an embossing panel having waviness.

4. The electronic device (ED) of claim 3, wherein the second sheet (ST2) comprises a cushion panel.

5. The electronic device (ED) of claim 2, wherein the adhesive member (RS) contacts the first sheet (ST1).

6. The electronic device (ED) of claim 5, wherein the fingerprint sensor (FS) is spaced apart from the second sheet (ST2).

7. The electronic device (ED) of claim 2, wherein the adhesive member (RS) is spaced apart from the first sheet (ST1).

8. The electronic device (ED) of claim 2, wherein the fingerprint sensor (FS) is spaced apart from the side surface of the opening part (OP) with a predetermined space therebetween, and
the spaced space is filled by the adhesive member (RS).

9. The electronic device (ED) of claim 1, wherein the front surface of the base substrate (BS) is divided into a first area on which the image (IM) is displayed and a second area adjacent to the first area, and
the opening part (OP) is overlapped with the first area on a plane.

10. The electronic device (ED) of claim 1, wherein the lower panel (LP) comprises metal.

11. The electronic device (ED) of claim 1, further comprising a cover layer (CP) configured to cover the rear surface of the display panel (DP), and
the cover layer (CP) has a black color,
wherein the cover layer (CP) is disposed between the first sheet (ST1) and the display panel (DP) and includes a light absorbing material.

12. The electronic device (ED) of claim 1, further comprising:
a circuit board (CB) connected to one side of the base substrate (BS); and
a sensing circuit board (CB-F) connected with the fingerprint sensor (FS) and extending outside the opening part (OP) to electrically connect the fingerprint sensor (FS) and the circuit board (CB).

13. The electronic device (ED) of claim 1, further comprising a touch sensing unit disposed on the front surface of the base substrate (BS), and
the touch sensing unit overlaps the pixels (PX) on a plane.

14. The electronic device (ED) of claim 1, wherein the base substrate (BS) comprises a planar part (PP) and a bending part connected with the planar part (PP) and bent toward the rear surface of the base substrate (BS), and
the cover panel (CVP) is disposed between the planar part (PP) and the bending part.

15. An electronic device (ED) comprising:
a display panel (DP) comprising a front surface comprising a display area (DA) configured to display an image (IM) and a peripheral area (NAA) disposed adjacent to the display area (DA) and a rear surface opposed to the front surface;
a first sheet (ST1) disposed on the rear surface of the display panel (DP) and in which a first opening part (OP1) that is overlapped with the display area (DA) is defined;
a second sheet (ST2) disposed below the first sheet (ST1) and in which a second opening part (OP2) that is overlapped with the first opening part (OP1) is defined;
a fingerprint sensor (FS) disposed on the rear surface of the display panel (DP) and accommodated in the second opening part (OP2); and
an adhesive member (RS) contacting to the fingerprint sensor (FS) and the display panel (DP) and accommodated in the first opening part (OP1),
wherein the adhesive member (RS) overlaps the fingerprint sensor (FS) in a plan view,
wherein a side surface of the first opening part (OP1) facing the adhesive member (RS) and a side surface of the second opening part (OP2) facing the fingerprint sensor (FS) form a step (STP) in a cross-sectional view, and
wherein the side surface of the first opening part (OP1) is connected with the side surface of the second opening part (OP2),
**characterized in that**
the adhesive member (RS) has a planar size less than that of the fingerprint sensor (FS), and
the first opening part (OP1) has a planar size less than that of the second opening part (OP2).

16. The electronic device (ED) of claim 15, wherein the adhesive member (RS) contacts a side surface of the first opening part (OP1).

17. The electronic device (ED) of claim 15, wherein the adhesive member (RS) is spaced apart from a side surface of the first opening part (OP1).

18. The electronic device (ED) of claim 15, further comprising a lower panel (LP) disposed between the first sheet (ST1) and the display panel (DP), and
the lower panel (LP) comprises a light reflecting material.

19. The electronic device (ED) of claim 15, further comprising a rear surface cover layer (CP) disposed between the first sheet (ST1) and the display panel (DP) to cover the rear surface of the display panel (DP), and
the rear surface cover layer (CP) comprises a light absorbing material.

20. The electronic device (ED) of claim 19, wherein the rear surface cover layer (CP) is disposed directly on the rear surface of the display panel (DP).

## Patentansprüche

1. Eine elektronische Vorrichtung (ED), umfassend:
ein Anzeigepanel (DP), umfassend ein Basissubstrat (BS), das eine Vorderfläche und eine der Vorderfläche gegenüberliegende Rückfläche umfasst, und eine Vielzahl von Pixeln (PX), die auf der Vorderfläche des Basissubstrats (BS) angeordnet sind und dazu eingerichtet sind, ein Bild (1M) anzuzeigen;
eine Abdeckplatte (CVP), die von der Rückfläche des Anzeigepanels (DP) beabstandet ist und in der ein Öffnungsteil (OP) definiert ist; und
einen Fingerabdrucksensor (FS), der mit einem vorbestimmten Abstand (GA1) von der Abdeckplatte (CVP) beabstandet ist und in dem Öffnungsteil (OP) aufgenommen ist,
wobei das Öffnungsteil (OP) eine Seitenfläche umfasst, die eine Stufe (STP) aufweist, und
wobei eine Seitenfläche des Fingerabdrucksensors (FS) in einer Querschnittsansicht der Stufe (STP) beabstandet gegenüberliegt,
wobei die elektronische Vorrichtung (ED) ferner umfasst:
ein Klebeelement (RS), das in dem Öffnungsteil (OP) aufgenommen und zwischen dem Fingerabdrucksensor (FS) und dem Anzeigepanel (DP) angeordnet ist,
eine untere Platte (LP), die zwischen der Abdeckplatte (CVP) und dem Anzeigepanel (DP) angeordnet ist, und
wobei das Klebeelement (RS) die untere Platte (LP) mit dem Fingerabdrucksensor (FS) koppelt,
wobei die untere Platte (LP) die Rückfläche des Anzeigepanels (DP) berührt,
wobei eine planare Größe der Abdeckplatte (CVP) gleich oder kleiner als eine planare Größe des Anzeigepanels (DP) ist,
**dadurch gekennzeichnet, dass**
der Fingerabdrucksensor (FS) in einer Draufsicht eine Seitenfläche des Klebeelements (RS) überlappt und auf der Rückfläche des Anzeigepanels (DP) angeordnet ist, und
die Seitenfläche des Öffnungsteils (OP) der Seitenfläche des Klebeelements (RS) in der Draufsicht gegenüberliegt und von dieser beabstandet angeordnet ist.

2. Die elektronische Vorrichtung (ED) nach Anspruch 1, wobei die Abdeckplatte (CVP) umfasst:
eine erste Schicht (ST1), die auf der Rückfläche des Anzeigepanels (DP) angeordnet ist; und
eine zweite Schicht (ST2), die auf einer Rückfläche der ersten Schicht (ST1) angeordnet ist,
wobei das Öffnungsteil (OP) Folgendes umfasst:
ein erstes Öffnungsteil (OP1), das durch die erste Schicht (ST1) hindurchgeht;
und
ein zweites Öffnungsteil (OP2), das durch die zweite Schicht (ST2) hindurchgeht und das erste Öffnungsteil (OP1) überlappt,
wobei das erste Öffnungsteil (OP1) eine planare Größe aufweist, die kleiner als diejenige des zweiten Öffnungsteils (OP2) und größer als der Fingerabdrucksensor (FS) ist.

3. Die elektronische Vorrichtung (ED) nach Anspruch 2, wobei die erste Schicht (ST1) eine Prägeplatte umfasst, die Welligkeit aufweist.

4. Die elektronische Vorrichtung (ED) nach Anspruch 3, wobei die zweite Schicht (ST2) eine Polsterplatte umfasst.

5. Die elektronische Vorrichtung (ED) nach Anspruch 2, wobei das Klebeelement (RS) die erste Schicht (ST1) berührt.

6. Die elektronische Vorrichtung (ED) nach Anspruch 5, wobei der Fingerabdrucksensor (FS) von der zweiten Schicht (ST2) beabstandet ist.

7. Die elektronische Vorrichtung (ED) nach Anspruch 2, wobei das Klebeelement (RS) von der ersten Schicht (ST1) beabstandet ist.

8. Die elektronische Vorrichtung (ED) nach Anspruch 2, wobei der Fingerabdrucksensor (FS) mit einem vorbestimmten Zwischenraum dazwischen von der Seitenfläche des Öffnungsteils (OP) beabstandet ist, und
der beabstandete Zwischenraum durch das Klebeelement (RS) gefüllt ist.

9. Die elektronische Vorrichtung (ED) nach Anspruch 1, wobei die Vorderfläche des Basissubstrats (BS) in einen ersten Bereich, auf dem das Bild (1M) angezeigt wird, und einen zweiten Bereich, der benachbart zu dem ersten Bereich ist, unterteilt ist, und
das Öffnungsteil (OP) in einer Ebene den ersten Bereich überlappt.

10. Die elektronische Vorrichtung (ED) nach Anspruch 1, wobei die untere Platte (LP) Metall umfasst.

11. Die elektronische Vorrichtung (ED) nach Anspruch 1, ferner umfassend eine Abdeckschicht (CP), die dazu eingerichtet ist, die Rückfläche des Anzeigepanels (DP) abzudecken, und
wobei die Abdeckschicht (CP) eine schwarze Farbe aufweist,
wobei die Abdeckschicht (CP) zwischen der ersten Schicht (ST1) und dem Anzeigepanel (DP) angeordnet ist und ein lichtabsorbierendes Material umfasst.

12. Die elektronische Vorrichtung (ED) nach Anspruch 1, ferner umfassend:
eine Leiterplatte (CB), die mit einer Seite des Basissubstrats (BS) verbunden ist; und
eine Sensorleiterplatte (CB-F), die mit dem Fingerabdrucksensor (FS) verbunden ist und sich außerhalb des Öffnungsteils (OP) erstreckt, um den Fingerabdrucksensor (FS) und die Leiterplatte (CB) elektrisch zu verbinden.

13. Die elektronische Vorrichtung (ED) nach Anspruch 1, ferner umfassend eine Berührungserfassungseinheit, die auf der Vorderfläche des Basissubstrats (BS) angeordnet ist,
wobei die Berührungserfassungseinheit in einer Ebene die Pixel (PX) überlappt.

14. Die elektronische Vorrichtung (ED) nach Anspruch 1, wobei das Basissubstrat (BS) einen ebenen Teil (PP) und einen Biegeteil umfasst, der mit dem ebenen Teil (PP) verbunden ist und zur Rückfläche des Basissubstrats (BS) hingebogen ist, und
wobei die Abdeckplatte (CVP) zwischen dem ebenen Teil (PP) und dem Biegeteil angeordnet ist.

15. Eine elektronische Vorrichtung (ED), umfassend:
ein Anzeigepanel (DP), umfassend eine Vorderfläche, die einen Anzeigebereich (DA), der dazu eingerichtet ist, ein Bild (1M) anzuzeigen, und einen peripheren Bereich (NAA), der benachbart zu dem Anzeigebereich (DA) angeordnet ist, umfasst, und eine der Vorderfläche gegenüberliegende Rückfläche;
eine erste Schicht (ST1), die auf der Rückfläche des Anzeigepanels (DP) angeordnet ist und in der ein erstes Öffnungsteil (OP1), das den Anzeigebereich (DA) überlappt, definiert ist;
eine zweite Schicht (ST2), die unterhalb der ersten Schicht (ST1) angeordnet ist und in der ein zweites Öffnungsteil (OP2), das das erste Öffnungsteil (OP1) überlappt, definiert ist;
einen Fingerabdrucksensor (FS), der auf der Rückfläche des Anzeigepanels (DP) angeordnet und in dem zweiten Öffnungsteil (OP2) aufgenommen ist; und
ein Klebeelement (RS), das den Fingerabdrucksensor (FS) und das Anzeigepanel (DP) berührt und in dem ersten Öffnungsteil (OP1) aufgenommen ist,
wobei das Klebeelement (RS) in einer Draufsicht den Fingerabdrucksensor (FS) überlappt,
wobei eine Seitenfläche des ersten Öffnungsteils (OP1), die dem Klebeelement (RS) zugewandt ist, und eine Seitenfläche des zweiten Öffnungsteils (OP2), die dem Fingerabdrucksensor (FS) zugewandt ist, in einer Querschnittsansicht eine Stufe (STP) bilden, und
wobei die Seitenfläche des ersten Öffnungsteils (OP1) mit der Seitenfläche des zweiten Öffnungsteils (OP2) verbunden ist,
**dadurch gekennzeichnet, dass**
das Klebeelement (RS) eine planare Größe aufweist, die kleiner als diejenige des Fingerabdrucksensors (FS) ist, und
das erste Öffnungsteil (OP1) eine planare Größe aufweist, die kleiner als diejenige des zweiten Öffnungsteils (OP2) ist.

16. Die elektronische Vorrichtung (ED) nach Anspruch 15, wobei das Klebeelement (RS) eine Seitenfläche des ersten Öffnungsteils (OP1) berührt.

17. Die elektronische Vorrichtung (ED) nach Anspruch 15, wobei das Klebeelement (RS) von einer Seitenfläche des ersten Öffnungsteils (OP1) beabstandet ist.

18. Die elektronische Vorrichtung (ED) nach Anspruch 15, ferner umfassend eine untere Platte (LP), die zwischen der ersten Schicht (ST1) und dem Anzeigepanel (DP) angeordnet ist,
wobei die untere Platte (LP) ein lichtreflektierendes Material umfasst.

19. Die elektronische Vorrichtung (ED) nach Anspruch 15, ferner umfassend eine Rückflächenabdeckschicht (CP), die zwischen der ersten Schicht (ST1) und dem Anzeigepanel (DP) angeordnet ist, um die Rückfläche des Anzeigepanels (DP) abzudecken,
wobei die Rückflächenabdeckschicht (CP) ein lichtabsorbierendes Material umfasst.

20. Die elektronische Vorrichtung (ED) nach Anspruch 19, wobei die Rückflächenabdeckschicht (CP) direkt auf der Rückfläche des Anzeigepanels (DP) angeordnet ist.

## Revendications

1. Dispositif électronique (ED) comprenant :
un panneau d'affichage (DP) comprenant un substrat de base (BS) comprenant une surface avant et une surface arrière opposée à la surface avant et une pluralité de pixels (PX) disposés sur la surface avant du substrat de base (BS) configurés pour afficher une image (IM) ;
un panneau de couverture (CVP) espacé de la surface arrière du panneau d'affichage (DP) et dans lequel une partie d'ouverture (OP) est définie ; et
un capteur d'empreintes digitales (FS) espacé d'un espacement prédéterminé (GA1) du panneau de couverture (CVP) et logé dans la partie d'ouverture (OP),
dans lequel la partie d'ouverture (OP) comprend une surface latérale présentant une marche (STP), et
dans lequel une surface latérale du capteur d'empreintes digitales (FS) est orientée à l'opposé de la marche (STP) dans une vue en coupe transversale,
le dispositif électronique (ED) comprenant en outre :
un élément adhésif (RS) logé dans la partie d'ouverture (OP) et disposé entre le capteur d'empreintes digitales (FS) et le panneau d'affichage (DP),
un panneau inférieur (LP) disposé entre le panneau de couverture (CVP) et le panneau d'affichage (DP), et
l'élément adhésif (RS) couple le panneau inférieur (LP) au capteur d'empreintes digitales (FS),
dans lequel le panneau inférieur (LP) vient en contact avec la surface arrière du panneau d'affichage (DP),
dans lequel une taille plane du panneau de couverture (CVP) est égale à ou plus petite qu'une taille plane du panneau d'affichage (DP),
**caractérisé en ce que**
le capteur d'empreintes digitales (FS) chevauche une surface latérale de l'élément adhésif (RS) dans une vue en plan et est disposé sur la surface arrière du panneau d'affichage (DP), et
la surface latérale de la partie d'ouverture (OP) est orientée vers et agencée espacée de la surface latérale de l'élément adhésif (RS) dans la vue en plan.

2. Dispositif électronique (ED) selon la revendication 1, dans lequel le panneau de couverture (CVP) comprend :
une première nappe (ST1) disposée sur la surface arrière du panneau d'affichage (DP) ; et
une deuxième nappe (ST2) disposée sur une surface arrière de la première nappe (ST1),
dans lequel la partie d'ouverture (OP) comprend :
une première partie d'ouverture (OP1) qui traverse la première nappe (ST1) ; et
une deuxième partie d'ouverture (OP2) qui traverse la deuxième nappe (ST2) et qui est en chevauchement avec la première partie d'ouverture (OP1),
dans lequel la première partie d'ouverture (OP1) présente une taille plane plus petite que celle de la deuxième partie d'ouverture (OP2) et plus grande que le capteur d'empreintes digitales (FS).

3. Dispositif électronique (ED) selon la revendication 2, dans lequel la première nappe (ST1) comprend un panneau d'embossage présentant des ondulations.

4. Dispositif électronique (ED) selon la revendication 3, dans lequel la deuxième nappe (ST2) comprend un panneau d'amortissement.

5. Dispositif électronique (ED) selon la revendication 2, dans lequel l'élément adhésif (RS) vient en contact avec la première nappe (ST1).

6. Dispositif électronique (ED) selon la revendication 5, dans lequel le capteur d'empreintes digitales (FS) est espacé de la deuxième nappe (ST2).

7. Dispositif électronique (ED) selon la revendication 2, dans lequel l'élément adhésif (RS) est espacé de la première nappe (ST1).

8. Dispositif électronique (ED) selon la revendication 2, dans lequel le capteur d'empreintes digitales (FS) est espacé de la surface latérale de la partie d'ouverture (OP) avec un espacement prédéterminé entre eux, et
l'espacement est rempli par l'élément adhésif (RS).

9. Dispositif électronique (ED) selon la revendication 1, dans lequel la surface avant du substrat de base (BS) est divisée en une première zone sur laquelle l'image (IM) est affichée et une deuxième zone adjacente à la première zone, et
la partie d'ouverture (OP) est en chevauchement avec la première zone sur un plan.

10. Dispositif électronique (ED) selon la revendication 1, dans lequel le panneau inférieur (LP) comprend du métal.

11. Dispositif électronique (ED) selon la revendication 1, comprenant en outre une couche de couverture (CP) configurée pour recouvrir la surface arrière du panneau d'affichage (DP), et
la couche de couverture (CP) présente une couleur noire,
dans lequel la couche de couverture (CP) est disposée entre la première nappe (ST1) et le panneau d'affichage (DP) et comporte un matériau absorbant la lumière.

12. Dispositif électronique (ED) selon la revendication 1, comprenant en outre :
un circuit imprimé (CB) relié à un côté du substrat de base (BS) ; et
un circuit de détection (CB-F) relié au capteur d'empreintes digitales (FS) et s'étendant hors de la partie d'ouverture (OP) pour relier électriquement le capteur d'empreintes digitales (FS) et le circuit imprimé (CB).

13. Dispositif électronique (ED) selon la revendication 1, comprenant en outre une unité de détection tactile disposée sur la surface avant du substrat de base (BS), et
l'unité de détection tactile chevauche les pixels (PX) sur un plan.

14. Dispositif électronique (ED) selon la revendication 1, dans lequel le substrat de base (BS) comprend une partie plane (PP) et une partie pliable reliée à la partie plane (PP) et pliée vers la surface arrière du substrat de base (BS), et
le panneau de couverture (CVP) est disposé entre la partie plane (PP) et la partie pliable.

15. Dispositif électronique (ED) comprenant :
un panneau d'affichage (DP) comprenant une surface avant comprenant une zone d'affichage (DA) configurée pour afficher une image (IM) et une zone périphérique (NAA) disposée adjacente à la zone d'affichage (DA) et une surface arrière opposée à la surface avant ;
une première nappe (ST1) disposée sur la surface arrière du panneau d'affichage (DP) et dans laquelle une première partie d'ouverture (OP1) qui est en chevauchement avec la zone d'affichage (DA) est définie ;
une deuxième nappe (ST2) disposée au-dessous de la première nappe (ST1) et dans laquelle une deuxième partie d'ouverture (OP2) qui est en chevauchement avec la première partie d'ouverture (OP1) est définie ;
un capteur d'empreintes digitales (FS) disposé sur la surface arrière du panneau d'affichage (DP) et logé dans la deuxième partie d'ouverture (OP2) ; et
un élément adhésif (RS) en contact avec le capteur d'empreintes digitales (FS) et le panneau d'affichage (DP) et logé dans la première partie d'ouverture (OP1),
dans lequel l'élément adhésif (RS) chevauche le capteur d'empreintes digitales (FS) dans une vue en plan,
dans lequel une surface latérale de la première partie d'ouverture (OP1) orientée vers l'élément adhésif (RS) et une surface latérale de la deuxième partie d'ouverture (OP2) orientée vers le capteur d'empreintes digitales (FS) forment une marche (STP) dans une vue en coupe transversale, et
dans lequel la surface latérale de la première partie d'ouverture (OP1) est reliée à la surface latérale de la deuxième partie d'ouverture (OP2),
**caractérisé en ce que**
l'élément adhésif (RS) présente une taille plane plus petite que celle du capteur d'empreintes digitales (FS), et
la première partie d'ouverture (OP1) présente une taille plane plus petite que celle de la deuxième partie d'ouverture (OP2).

16. Dispositif électronique (ED) selon la revendication 15, dans lequel l'élément adhésif (RS) vient en contact avec une surface latérale de la première partie d'ouverture (OP1).

17. Dispositif électronique (ED) selon la revendication 15 dans lequel l'élément adhésif (RS) est espacé d'une surface latérale de la première partie d'ouverture (OP1).

18. Dispositif électronique (ED) selon la revendication 15, comprenant en outre un panneau inférieur (LP) disposé entre la première nappe (ST1) et le panneau d'affichage (DP), et
le panneau inférieur (LP) comprend un matériau réfléchissant la lumière.

19. Dispositif électronique (ED) selon la revendication 15, comprenant en outre une couche de couverture de surface arrière (CP) disposée entre la première nappe (ST1) et le panneau d'affichage (DP) pour recouvrir la surface arrière du panneau d'affichage (DP), et
la couche de couverture de surface arrière (CP) comprend un matériau absorbant la lumière.

20. Dispositif électronique (ED) selon la revendication 19, dans lequel la couche de couverture de surface arrière (CP) est disposée directement sur la surface arrière du panneau d'affichage (DP).
